# EUROPEAN PATENT APPLICATION

(11) **EP 4 094 586 A1**
(43) Date of publication of application: **30.11.2022**
(21) Application number: 21760671.4
(22) Date of filing: 25.01.2021
(51) Int. Cl.: A23L 5/00, C12J 1/00, A23L 2/68

(54) **ACETIC ACID-CONTAINING FOOD OR BEVERAGE**

(30) Priority: 28.02.2020 JP 2020034287
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: SAKAKIBARA, Rena, Handa-shi, Aichi 475-8585 (JP)
(74) Representative: Hasegawa, Kan
(86) International application number: PCT/JP2021/002383
(87) International publication number: WO 2021/171860

(57) **Abstract**

An object is to provide an acetic acid-containing food or drink in which acetic acid odor, pungent odor, and stuffy odor are suppressed not only immediately after preparation, but also after storage for a certain period of time. The object is achieved by an acetic acid-containing food or drink comprising 0.02 w/v% or more of acetic acid and at least one aromatic component selected from the group consisting of isobutanal (component A), butanal (component B), 2-methylbutanal (component C), pentanal (component D), isobutyl acetate (component E), and butyl acetate (component F), the total content of the aromatic component being 0.1 ppb or more.

## Description

### Technical Field

The present invention relates to a food or drink containing acetic acid; etc.

### Background Art

Acetic acid is used in various foods as a flavoring ingredient and for its expected bacteriostatic effect etc. In recent years, as people have become more health-conscious, acetic acid has been widely consumed as a beverage in expectation of its various beneficial effects, such as improving obesity, controlling blood pressure, and suppressing elevated blood glucose levels.

However, foods or drinks containing acetic acid may have an acid odor derived from acetic acid (in particular, brewed vinegar) (acetic acid odor), a pungent odor (odor like the smell of Cemedine or a thinner), and a stuffy odor (odor like the smell of sweaty feet or socks that have been taken off). These odors may hinder the intake of foods or drinks containing acetic acid. In particular, it is important to consume an acetic acid-containing food or drink on a daily basis if the beneficial effects mentioned above are to be expected. Therefore, solving this problem is particularly important.

Patent literature (PTL 1) discloses a method for reducing acetic acid odor of an acetic acid-containing food or drink without producing adverse effects on food taste in a simple and versatile manner in which hexanal is added to the acetic acid-containing food or drink in such an amount that the content mass ratio of acetic acid to hexanal falls within a specific range. However, PTL 1 discloses no countermeasures for pungent odor and stuffy odor.

### Citation List

### Patent Literature

PTL 1: JP2010-124696A

### Summary of Invention

### Technical Problem

The addition of an appropriate amount of fruit juice may alleviate the acetic acid odor, pungent odor, and stuffy odor immediately after preparation. However, the effect is not sustained especially with regard to stuffy odor, and the original favorable aroma of the fruit juice disappears by heating or over time, such as during distribution or storage. If anything, the addition of fruit juice may worsen the stuffy odor. The addition of fruit juice can also cause the generation of deterioration odor due to light or heating or over time, such as during distribution or storage.

An object of the present invention is to provide an acetic acid-containing food or drink in which acetic acid odor, pungent odor, and stuffy odor are suppressed not only immediately after preparation, but also after storage for a certain period of time. Furthermore, another object of the present invention is to provide a fruit juice- and acetic acid-containing food or drink in which acetic acid odor, pungent odor, and stuffy odor are suppressed not only immediately after preparation, but also after storage for a certain period of time; and in which deterioration odor is also suppressed.

### Solution to Problem

In view of the problems described above, the present inventor conducted extensive research, and found that the problems can be solved by an acetic acid-containing food or drink comprising 0.02 w/v% or more of acetic acid and at least one aromatic component selected from the group consisting of isobutanal (component A), butanal (component B), 2-methylbutanal (component C), pentanal (component D), isobutyl acetate (component E), and butyl acetate (component F), the total content of the aromatic component being 0.1 ppb or more. The inventor conducted further research based on this finding and accomplished the present invention. Specifically, the present invention includes the following embodiments.

Item 1. An acetic acid-containing food or drink comprising 0.02 w/v% or more of acetic acid and at least one aromatic component selected from the group consisting of isobutanal (component A), butanal (component B), 2-methylbutanal (component C), pentanal (component D), isobutyl acetate (component E), and butyl acetate (component F), the total content of the aromatic component being 0.1 ppb or more.

Item 2. The acetic acid-containing food or drink according to Item 1, which meets at least one requirement selected from the group consisting of
(requirement X) the total content of component A, component B, component C, component D, and component E is 0.1 ppb or more, and (requirement Y) the content of component F is 1.0 ppb or more.

Item 3. The acetic acid-containing food or drink according to Item 1 or 2, wherein the total content of the aromatic component is 0.5 ppb or more.

Item 4. The acetic acid-containing food or drink according to any one of Items 1 to 3, which meets at least one requirement selected from the group consisting of
(requirement i) the total content of component A, component B, component C, and component D is 0.3 ppb or more,
(requirement ii) the content of component E is 1.0 ppb or more, and
(requirement iii) the content of component F is 5.0 ppb or more.

Item 5. The acetic acid-containing food or drink according to Item 4, wherein requirement i meets at least one requirement selected from the group consisting of
(requirement ia) the total content of component A and component C is 0.5 ppb or more, and
(requirement ib) the total content of component B and component D is 0.3 ppb or more.

Item 6. The acetic acid-containing food or drink according to any one of Items 1 to 5, which meets at least one requirement selected from the group consisting of
(requirement ia') the total content of component A and component C is 1.0 ppb or more,
(requirement ib') the total content of component B and component D is 0.5 ppb or more,
(requirement ii') the content of component E is 2.0 ppb or more, and
(requirement iii') the content of component F is 10.0 ppb or more.

Item 7. The acetic acid-containing food or drink according to any one of Items 1 to 6, which comprises component B and component D.

Item 8. The acetic acid-containing food or drink according to any one of Items 1 to 7, wherein the mass ratio of component B to component D (mass of component B:mass of component D) is 2:8 to 8:2.

Item 9. The acetic acid-containing food or drink according to any one of Items 1 to 8, further comprising fruit juice.

Item 10. The acetic acid-containing food or drink according to Item 9, wherein the fruit juice content (on a not-from-concentrate fruit juice basis) is 0.2 mass% or more and 700 mass% or less.

Item 11. The acetic acid-containing food or drink according to Item 9 or 10, wherein the fruit juice is apple juice, blueberry juice, citrus juice, strawberry juice, pomegranate juice, grape juice, peach juice, Japanese plum juice, or mango juice.

Item 12. The acetic acid-containing food or drink according to any one of Items 1 to 11, which is a drink or a composition for preparing a drink.

Item 13. A method for producing an acetic acid-containing food or drink in which at least one odor selected from the group consisting of acetic acid odor, pungent odor, and stuffy odor is reduced, the method comprising incorporating acetic acid at a content of 0.02 w/v% or more, and incorporating at least one aromatic component selected from the group consisting of isobutanal (component A), butanal (component B), 2-methylbutanal (component C), pentanal (component D), isobutyl acetate (component E), and butyl acetate (component F) at a total content of 0.1 ppb or more.

Item 14. A method for suppressing at least one odor selected from the group consisting of acetic acid odor, pungent odor, and stuffy odor of an acetic acid-containing food or drink, the method comprising incorporating at least one aromatic component selected from the group consisting of isobutanal (component A), butanal (component B), 2-methylbutanal (component C), pentanal (component D), isobutyl acetate (component E), and butyl acetate (component F) at a total content of 0.1 ppb or more.

Item 15. An agent for suppressing at least one odor selected from the group consisting of acetic acid odor, pungent odor, and stuffy odor of an acetic acid-containing food or drink, the agent comprising at least one aromatic component selected from the group consisting of isobutanal (component A), butanal (component B), 2-methylbutanal (component C), pentanal (component D), isobutyl acetate (component E), and butyl acetate (component F) .

### Advantageous Effects of Invention

The present invention can provide an acetic acid-containing food or drink in which acetic acid odor, pungent odor, and stuffy odor are suppressed not only immediately after preparation, but also after storage for a certain period of time. Furthermore, a preferred embodiment of the present invention can provide a fruit juice- and acetic acid-containing food or drink in which acetic acid odor, pungent odor, and stuffy odor are suppressed not only immediately after preparation, but also after storage for a certain period of time; and in which deterioration odor is also suppressed.

### Description of Embodiments

In the present specification, the expressions "comprise" and "contain" include the concepts of "comprise," "contain," "consist essentially of," and "consist of."

In the present specification, component A, component B, component C, component D, component E, and component F may be collectively referred to as "the aromatic components of the present invention."

The present invention according to one embodiment relates to an acetic acid-containing food or drink comprising 0.02 w/v% or more of acetic acid and at least one aromatic component selected from the group consisting of isobutanal (component A), butanal (component B), 2-methylbutanal (component C), pentanal (component D), isobutyl acetate (component E), and butyl acetate (component F), the total content of the aromatic component being 0.1 ppb or more (which may be referred to herein as "the acetic acid-containing food or drink of the present invention"). This acetic acid-containing food or drink is described below.

The method for calculating the concentration of each component in the acetic acid-containing food or drink of the present invention is as follows. The concentration of each component in the acetic acid-containing food or drink of the present invention can be calculated from the amount of the component and the volume of the acetic acid-containing food or drink when the amount of the component is known (for example, when the acetic acid-containing food or drink is obtained by mixing purified components). When the amount of the component is unknown, the concentration of the component can be calculated in accordance with or based on the method described in Test Example 2 later. In the present specification, "ppm" and "ppb" are both mass concentrations (w/w).

The acetic acid-containing food or drink of the present invention contains acetic acid. Acetic acid refers to acetic acid molecules (CH₃COOH) and acetate ions (CH₃COO⁻), and the acetic acid content refers to the total concentration of these. The content of acetic acid in the acetic acid-containing food or drink of the present invention is not particularly limited as long as it is 0.02 w/v% or more. When the acetic acid content is at this level, and further when the acetic acid concentration is not less than the preferred lower limits below, the acetic acid odor becomes more unpleasant; that is, the need for the acetic acid odor suppression technique of the present invention is increased. The acetic acid content is preferably 0.02 to 15 w/v%, more preferably 0.02 to 10 w/v%, even more preferably 0.02 to 8 w/v%, still even more preferably 0.02 to 7 w/v%, particularly preferably 0.02 to 5 w/v%, and furthermore particularly preferably 0.02 to 4 w/v%, for example, from the viewpoint of being suitable for eating or drinking (particularly drinking) as is and from the viewpoint of being suitable for the preparation of a food or drink to be eaten or drunk (particularly from the viewpoint of being suitable for eating or drinking (particularly drinking) as is). Ranges in which the upper and/or lower limits of the above ranges are arbitrarily exchanged and ranges in which the upper and/or lower limits of the above ranges are arbitrarily combined are also exemplified in the present specification. The origin of the acetic acid in the acetic acid-containing food or drink of the present invention is not particularly limited as long as it is suitable for foods or drinks. For example, the acetic acid may be derived from a food additive (the acetic acid of the acetic acid-containing food or drink of the present invention may be acetic acid contained in a food additive), or derived from a seasoning, a food ingredient, etc. contained in the food or drink (the acetic acid of the acetic acid-containing food or drink of the present invention may be acetic acid contained in a seasoning, a food ingredient, etc.).

The acetic acid-containing food or drink of the present invention can contain isovaleric acid as a stuffy odor source together with acetic acid. Isovaleric acid is a component that is believed to be a cause of odor like the smell of sweaty feet or socks that have been taken off. Isovaleric acid is a component characteristically contained in brewed vinegar, which is obtained by subjecting sugar or a saccharified starch liquid to alcoholic fermentation with yeast and subjecting the resulting product to acetic acid fermentation with acetic acid bacteria. Isovaleric acid is also a component contained in many foods such as cheese and *natto,* as well as the brewed vinegar above. The content of isovaleric acid in the acetic acid-containing food or drink of the present invention is preferably 0.1 ppm or more, more preferably 0.3 ppm or more, even more preferably 1.0 ppm or more, and still even more preferably 3.0 ppm or more, from the viewpoint that, for example, the stuffy odor derived from isovaleric acid becomes stronger; that is, the need for the stuffy odor suppression technique of the present invention is further increased. The upper limit of the content is not particularly limited, and is, for example, 3000 ppm, 1000 ppm, 500 ppm, 300 ppm, 200 ppm, 100 ppm, or 50 ppm. Ranges in which the upper and/or lower limits of the above ranges are arbitrarily combined are also exemplified in the present specification.

Component A (isobutanal, propanal, 2-methyl- (CAS registry No.: 78-84-2)) is an aromatic component and has the following aroma characteristics in an aromatic component database (Aroma Office Ver. 7.0 produced by Nishikawa Keisoku Co., Ltd.): nut, toast, banana, and chocolate-like. The use of component A can suppress acetic acid odor, pungent odor, and stuffy odor not only immediately after preparation, but also after storage for a certain period of time. Furthermore, by adjusting the content of component A, the effect of suppressing these odors can be further (in some cases, significantly) improved. The use of component A can also suppress deterioration odor derived from fruit juice after storage. When the acetic acid-containing food or drink of the present invention contains component A, the origin of component A is not particularly limited as long as it is suitable for foods or drinks. For example, component A may be derived from a formulation added, such as a flavor (component A of the acetic acid-containing food or drink of the present invention may be component A contained in a formulation), or derived from a seasoning, a food ingredient, etc. contained in the food or drink (component A of the acetic acid-containing food or drink of the present invention may be component A contained in a seasoning, a food ingredient, etc.).

When the acetic acid-containing food or drink of the present invention contains component A, the content of component A in the acetic acid-containing food or drink of the present invention is not particularly limited as long as component A can exert an effect of suppressing acetic acid odor, pungent odor, and stuffy odor, alone or together with one or more other aromatic components of the present invention. The content of component A is, for example, 0.1 ppb or more, preferably 0.3 ppb or more, more preferably 0.5 ppb or more, even more preferably 0.8 ppb or more, and particularly preferably 1.0 ppb or more, in terms of exerting the above effect by itself. The upper limit of the content is not particularly limited, and is, for example, 3000 ppb, 1500 ppb, or 300 ppb. The upper or lower limit of the content may be lower or higher than the above ranges; and these values may be, for example, 3 ppb, 10 ppb, 30 ppb, or 100 ppb. The range of the content may be a range in which the above upper and lower limits are arbitrarily combined, and is, for example, 0.1 ppb or more and 3000 ppb or less, preferably 0.5 ppb or more and 1500 ppb or less, and more preferably 1.0 ppb or more and 300 ppb or less.

Component B (butanal (CAS registry No.: 123-72-8)) is an aromatic component and has the following aroma characteristics in an aromatic component database (Aroma Office Ver. 7.0 produced by Nishikawa Keisoku Co., Ltd.): fish, smoky, fried onion, and caramel-like. The use of component B can suppress acetic acid odor, pungent odor, and stuffy odor not only immediately after preparation, but also after storage for a certain period of time. Furthermore, by adjusting the content of component B, the effect of suppressing these odors can be further (in some cases, significantly) improved. The use of component B can also suppress deterioration odor derived from fruit juice after storage. When the acetic acid-containing food or drink of the present invention contains component B, the origin of component B is not particularly limited as long as it is suitable for foods or drinks. For example, component B may be derived from a formulation added, such as a flavor (component B of the acetic acid-containing food or drink of the present invention may be component B contained in a formulation), or derived from a seasoning, a food ingredient, etc. contained in the food or drink (component B of the acetic acid-containing food or drink of the present invention may be component B contained in a seasoning, a food ingredient, etc.).

When the acetic acid-containing food or drink of the present invention contains component B, the content of component B in the acetic acid-containing food or drink of the present invention is not particularly limited as long as component B can exert an effect of suppressing acetic acid odor, pungent odor, and stuffy odor, alone or together with one or more other aromatic components of the present invention. The content of component B is, for example, 0.1 ppb or more, preferably 0.2 ppb or more, more preferably 0.3 ppb or more, even more preferably 0.4 ppb or more, and particularly preferably 0.5 ppb or more, in terms of exerting the above effect by itself. The upper limit of the content is not particularly limited, and is, for example, 1000 ppb, 500 ppb, or 100 ppb. The upper or lower limit of the content may be lower or higher than the above ranges; and these values may be, for example, 1 ppb, 3 ppb, 10 ppb, 30 ppb, or 50 ppb. The range of the content may be a range in which the above upper and lower limits are arbitrarily combined, and is, for example, 0.1 ppb or more and 1000 ppb or less, preferably 0.3 ppb or more and 500 ppb or less, and more preferably 0.5 ppb or more and 100 ppb or less.

Component C (2-methylbutanal, butanal, 2-methyl- (CAS registry No.: 96-17-3)) is an aromatic component and has the following aroma characteristics in an aromatic component database (Aroma Office Ver. 7.0 produced by Nishikawa Keisoku Co., Ltd.): mushroom, hazelnut, butter, and green herb-like. The use of component C can suppress acetic acid odor, pungent odor, and stuffy odor not only immediately after preparation, but also after storage for a certain period of time. Furthermore, by adjusting the content of component C, the effect of suppressing these odors can be further (in some cases, significantly) improved. The use of component C can also suppress deterioration odor derived from fruit juice after storage. When the acetic acid-containing food or drink of the present invention contains component C, the origin of component C is not particularly limited as long as it is suitable for foods or drinks. For example, component C may be derived from a formulation added, such as a flavor (component C of the acetic acid-containing food or drink of the present invention may be component C contained in a formulation), or derived from a seasoning, a food ingredient, etc. contained in the food or drink (component C of the acetic acid-containing food or drink of the present invention may be component C contained in a seasoning, a food ingredient, etc.).

When the acetic acid-containing food or drink of the present invention contains component C, the content of component C in the acetic acid-containing food or drink of the present invention is not particularly limited as long as component C can exert an effect of suppressing acetic acid odor, pungent odor, and stuffy odor, alone or together with one or more other aromatic components of the present invention. The content of component C is, for example, 0.1 ppb or more, preferably 0.3 ppb or more, more preferably 0.5 ppb or more, even more preferably 0.8 ppb or more, and particularly preferably 1.0 ppb or more, in terms of exerting the above effect by itself. The upper limit of the content is not particularly limited, and is, for example, 3000 ppb, 1500 ppb, or 300 ppb. The upper or lower limit of the content may be lower or higher than the above ranges; and these values may be, for example, 3 ppb, 10 ppb, 30 ppb, or 100 ppb. The range of the content may be a range in which the above upper and lower limits are arbitrarily combined, and is, for example, 0.1 ppb or more and 3000 ppb or less, preferably 0.5 ppb or more and 1500 ppb or less, and more preferably 1.0 ppb or more and 300 ppb or less.

Component D (pentanal (CAS registry No.: 110-62-3)) is an aromatic component and has the following aroma characteristics in an aromatic component database (Aroma Office Ver. 7.0 produced by Nishikawa Keisoku Co., Ltd.): oily, bitter, wood, and malt-like. The use of component D can suppress acetic acid odor, pungent odor, and stuffy odor not only immediately after preparation, but also after storage for a certain period of time. Furthermore, by adjusting the content of component D, the effect of suppressing these odors can be further (in some cases, significantly) improved. The use of component D can also suppress deterioration odor derived from fruit juice after storage. When the acetic acid-containing food or drink of the present invention contains component D, the origin of component D is not particularly limited as long as it is suitable for foods or drinks. For example, component D may be derived from a formulation added, such as a flavor (component D of the acetic acid-containing food or drink of the present invention may be component D contained in a formulation), or derived from a seasoning, a food ingredient, etc. contained in the food or drink (component D of the acetic acid-containing food or drink of the present invention may be component D contained in a seasoning, a food ingredient, etc.).

When the acetic acid-containing food or drink of the present invention contains component D, the content of component D in the acetic acid-containing food or drink of the present invention is not particularly limited as long as component D can exert an effect of suppressing acetic acid odor, pungent odor, and stuffy odor, alone or together with one or more other aromatic components of the present invention. The content of component D is, for example, 0.1 ppb or more, preferably 0.2 ppb or more, more preferably 0.3 ppb or more, even more preferably 0.4 ppb or more, and particularly preferably 0.5 ppb or more, in terms of exerting the above effect by itself. The upper limit of the content is not particularly limited, and is, for example, 1500 ppb, 750 ppb, or 150 ppb. The upper or lower limit of the content may be lower or higher than the above ranges; and these values may be, for example, 1 ppb, 3 ppb, 10 ppb, 30 ppb, or 100 ppb. The range of the content may be a range in which the above upper and lower limits are arbitrarily combined, and is, for example, 0.1 ppb or more and 1500 ppb or less, preferably 0.3 ppb or more and 750 ppb or less, and more preferably 0.5 ppb or more and 150 ppb or less.

Component E (isobutyl acetate (CAS registry No.: 110-19-0)) is an aromatic component and has the following aroma characteristics in an aromatic component database (Aroma Office Ver. 7.0 produced by Nishikawa Keisoku Co., Ltd.): adhesive, plastic, flower, and candy-like. The use of component E can suppress acetic acid odor, pungent odor, and stuffy odor not only immediately after preparation, but also after storage for a certain period of time. Furthermore, by adjusting the content of component E, the effect of suppressing these odors can be further (in some cases, significantly) improved. The use of component E can also suppress deterioration odor derived from fruit juice after storage. When the acetic acid-containing food or drink of the present invention contains component E, the origin of component E is not particularly limited as long as it is suitable for foods or drinks. For example, component E may be derived from a formulation added, such as a flavor (component E of the acetic acid-containing food or drink of the present invention may be component E contained in a formulation), or derived from a seasoning, a food ingredient, etc. contained in the food or drink (component E of the acetic acid-containing food or drink of the present invention may be component E contained in a seasoning, a food ingredient, etc.).

When the acetic acid-containing food or drink of the present invention contains component E, the content of component E in the acetic acid-containing food or drink of the present invention is not particularly limited as long as component E can exert an effect of suppressing acetic acid odor, pungent odor, and stuffy odor, alone or together with one or more other aromatic components of the present invention. The content of component E is, for example, 0.1 ppb or more, preferably 0.2 ppb or more, more preferably 0.5 ppb or more, even more preferably 1.0 ppb or more, still even more preferably 1.5 ppb or more, and particularly preferably 2.0 ppb or more, in terms of exerting the above effect by itself. The upper limit of the content is not particularly limited, and is, for example, 50000 ppb, 20000 ppb, or 15000 ppb. The upper or lower limit of the content may be lower or higher than the above ranges; and these values may be, for example, 3 ppb, 10 ppb, 30 ppb, 100 ppb, 300 ppb, 1000 ppb, or 3000 ppb. The range of the content may be a range in which the above upper and lower limits are arbitrarily combined, and is, for example, 0.1 ppb or more and 50000 ppb or less, preferably 1.0 ppb or more and 20000 ppb or less, and more preferably 2.0 ppb or more and 15000 ppb or less.

Component F (butyl acetate, acetic acid, butyl ester (CAS registry No.: 123-86-4)) is an aromatic component and has the following aroma characteristics in an aromatic component database (Aroma Office Ver. 7.0 produced by Nishikawa Keisoku Co., Ltd.): ether, juicy, banana, and green-like. The use of component F can suppress acetic acid odor, pungent odor, and stuffy odor not only immediately after preparation, but also after storage for a certain period of time. Furthermore, by adjusting the content of component F, the effect of suppressing these odors can be further (in some cases, significantly) improved. The use of component F can also suppress deterioration odor derived from fruit juice after storage. When the acetic acid-containing food or drink of the present invention contains component F, the origin of component F is not particularly limited as long as it is suitable for foods or drinks. For example, component F may be derived from a formulation added, such as a flavor (component F of the acetic acid-containing food or drink of the present invention may be component F contained in a formulation), or derived from a seasoning, a food ingredient, etc. contained in the food or drink (component F of the acetic acid-containing food or drink of the present invention may be component F contained in a seasoning, a food ingredient, etc.).

When the acetic acid-containing food or drink of the present invention contains component F, the content of component F in the acetic acid-containing food or drink of the present invention is not particularly limited as long as component F can exert an effect of suppressing acetic acid odor, pungent odor, and stuffy odor, alone or together with one or more other aromatic components of the present invention. The content of component F is, for example, 0.1 ppb or more, preferably 1.0 ppb or more, more preferably 5.0 ppb or more, even more preferably 8.0 ppb or more, and particularly preferably 10.0 ppb or more, in terms of exerting the above effect by itself. The upper limit of the content is not particularly limited, and is, for example, 50000 ppb, 40000 ppb, or 35000 ppb. The upper or lower limit of the content may be lower or higher than the above ranges; and these values may be, for example, 30 ppb, 100 ppb, 300 ppb, 1000 ppb, 3000 ppb, or 10000 ppb. The range of the content may be a range in which the above upper and lower limits are arbitrarily combined, and is, for example, 0.1 ppb or more and 50000 ppb or less, preferably 5.0 ppb or more and 40000 ppb or less, and more preferably 10.0 ppb or more and 35000 ppb or less.

The total content of the aromatic component(s) of the present invention in the acetic acid-containing food or drink of the present invention is 0.1 ppb or more. The meaning of total content is in the literal sense. When the acetic acid-containing food or drink of the present invention contains, for example, all of components A to F, the total content indicates the sum of the contents of components A to F. When the acetic acid-containing food or drink of the present invention contains, for example, component A and does not contain any of components B to F, the total content indicates the content of component A. When the acetic acid-containing food or drink of the present invention contains, for example, components A to E and does not contain component F, the total content indicates the sum of the contents of components A to E. When the total content is within the above range, acetic acid odor, pungent odor, and stuffy odor can be suppressed not only immediately after preparation, but also after storage for a certain period of time. The total content is preferably 0.3 ppb or more, more preferably 0.5 ppb or more, even more preferably 1 ppb or more, still even more preferably 3 ppb or more, particularly preferably 5 ppb or more, and furthermore particularly preferably 10 ppb or more, in terms of the effect of suppressing acetic acid odor, pungent odor, stuffy odor, deterioration odor, etc. Ranges in which the upper and/or lower limits of the above ranges are arbitrarily combined are also exemplified in the present specification.

Among the aromatic components of the present invention, for example, component A, component B, component C, component D, and component E are preferable, component A, component B, component C, and component D are more preferable, and component B and component D are even more preferable, in terms of the effect of suppressing acetic acid odor, pungent odor, stuffy odor, deterioration odor, etc. Taking this into account, the acetic acid-containing food or drink of the present invention preferably meets the following requirement(s), in terms of the effect of suppressing acetic acid odor, pungent odor, stuffy odor, deterioration odor, etc.

Preferably, the acetic acid-containing food or drink of the present invention meets at least one requirement selected from the group consisting of
(requirement X) the total content of component A, component B, component C, component D, and component E is 0.1 ppb or more, and (requirement Y) the content of component F is 1.0 ppb or more.

More preferably, the acetic acid-containing food or drink of the present invention meets at least one requirement selected from the group consisting of
(requirement i) the total content of component A, component B, component C, and component D is 0.3 ppb or more,
(requirement ii) the content of component E is 1.0 ppb or more, and
(requirement iii) the content of component F is 5.0 ppb or more.

Even more preferably, the acetic acid-containing food or drink of the present invention meets at least one requirement selected from the group consisting of
(requirement ia) the total content of component A and component C is 0.5 ppb or more,
(requirement ib) the total content of component B and component D is 0.3 ppb or more,
(requirement ii) the content of component E is 1.0 ppb or more, and
(requirement iii) the content of component F is 5.0 ppb or more.

Particularly preferably, the acetic acid-containing food or drink of the present invention meets at least one requirement selected from the group consisting of
(requirement ia') the total content of component A and component C is 1.0 ppb or more,
(requirement ib') the total content of component B and component D is 0.5 ppb or more,
(requirement ii') the content of component E is 2.0 ppb or more, and
(requirement iii') the content of component F is 10.0 ppb or more.

The total content in requirement X is preferably 0.2 ppb or more, more preferably 0.5 ppb or more, even more preferably 1.0 ppb or more, still even more preferably 1.5 ppb or more, and particularly preferably 2.0 ppb or more. The upper limit of the total content is not particularly limited, and is, for example, 50000 ppb, 20000 ppb, or 15000 ppb. The upper or lower limit of the total content may be lower or higher than the above ranges; and these values may be, for example, 3 ppb, 10 ppb, 30 ppb, 100 ppb, 300 ppb, 1000 ppb, or 3000 ppb. The range of the total content may be a range in which the above upper and lower limits are arbitrarily combined, and is, for example, 0.1 ppb or more and 50000 ppb or less, preferably 1.0 ppb or more and 20000 ppb or less, and more preferably 2.0 ppb or more and 15000 ppb or less.

The preferred content in requirement Y is the same as the content of component F described above.

The total content in requirement i and the total content in requirement ia are each preferably 0.5 ppb or more, more preferably 0.8 ppb or more, and particularly preferably 1.0 ppb or more. The upper limit of each of the total content in requirement i and the total content in requirement ia is not particularly limited, and is, for example, 3000 ppb, 1500 ppb, or 300 ppb. The upper or lower limit of each of the total content in requirement i and the total content in requirement ia may be lower or higher than the above ranges; and these values may be, for example, 3 ppb, 10 ppb, 30 ppb, or 100 ppb. The range of each of the total content in requirement i and the total content in requirement ia may be a range in which the above upper and lower limits are arbitrarily combined, and is, for example, 0.3 ppb or more and 3000 ppb or less, preferably 0.5 ppb or more and 1500 ppb or less, and more preferably 1.0 ppb or more and 300 ppb or less.

The total content in requirement ib is preferably 0.4 ppb or more, and particularly preferably 0.5 ppb or more. The upper limit of the total content is not particularly limited, and is, for example, 1500 ppb, 750 ppb, or 150 ppb. The upper or lower limit of the total content may be lower or higher than the above ranges; and these values may be, for example, 1 ppb, 3 ppb, 10 ppb, 30 ppb, or 100 ppb. The range of the total content may be a range in which the above upper and lower limits are arbitrarily combined, and is, for example, 0.3 ppb or more and 1500 ppb or less, preferably 0.3 ppb or more and 750 ppb or less, and more preferably 0.5 ppb or more and 150 ppb or less.

The preferred content in requirement ii is the same as the content of component E described above.

The preferred content in requirement iii is the same as the content of component F described above.

As described above, among the aromatic components of the present invention, component B and component D are the most preferable, in terms of the effect of suppressing acetic acid odor, pungent odor, stuffy odor, deterioration odor, etc. Thus, the acetic acid-containing food or drink of the present invention preferably contains component B and component D. The mass ratio of component B to component D (mass of component B:mass of component D) is not particularly limited, and is, for example, 0.1:9.9 to 9.9:0.1, 0.5:9.5 to 9.5:0.5, or 1:9 to 9:1. The mass ratio is preferably 2:8 to 8:2, more preferably 2.5:7.5 to 7.5:2.5, and particularly preferably 3:7 to 7:3, in terms of the synergistic effect of the combination of component B and component D.

The properties and state of the acetic acid-containing food or drink of the present invention are not particularly limited as long as they are those that the food or drink can take. For example, the acetic acid-containing food or drink of the present invention is in the form of a liquid, emulsion, gel, foam, solid, or the like. The acetic acid-containing food or drink of the present invention encompasses those in a single form and those composed of any combination of foods and drinks in multiple forms.

The acetic acid-containing food or drink is not particularly limited, and examples includes a food or drink to be eaten or drunk as is, a composition for preparing a food or drink to be eaten or drunk (i.e., a composition to be used for preparing a food or drink to be eaten or drunk as is), and the like. The phrase "food or drink to be eaten or drunk as is" include not only a food or drink to be eaten or drunk without adding any components, but also a food or drink to be eaten or drunk with a seasoning appropriately added as necessary by a person who eats or drinks the food or drink at the time of eating or drinking.

In one embodiment, the acetic acid-containing food or drink of the present invention excludes vinegar itself and/or a food or drink containing vinegar in a large amount (e.g., 70 mass% or more, 75 mass% or more, 80 mass% or more, 85 mass% or more, 90 mass% or more, 95 mass% or more, or 99 mass% or more).

Examples of the food or drink to be eaten or drunk as is include, but are not limited to, drinks, confectionery, cooked rice, noodles, prepared foods, soups, bread, pizza, cereals, packed lunches, and the like. Of these, for example, drinks and confectionery are preferable, and drinks are particularly preferable.

Examples of drinks include fruit juice-containing beverages, such as fruit juices, flavored beverages, flavored water, beauty drinks, and smoothies of citrus fruits (e.g., mandarin, orange, lemon, lime, grapefruit, *Citrus junos, Citrus sphaerocarpa, Citrus sudachi,* bergamot, pink grapefruit, *Citrus hassaku,* calamondin), tropical fruits (e.g., pineapple, banana, guava, mango, acerola, papaya, and passion fruit), lychee, strawberry, apple, peach, grape, white grape, cassis, raspberry, pomegranate, Japanese plum, pear, apricot, Asian plum, kiwifruit, melon, blueberry, and acai; dairy product-containing beverages, such as milk and beverages containing milk or milk components (e.g., processed products of milk, such as skimmed milk powder, whole milk powder, milk concentrate, yogurt, dairy cream, condensed milk, butter, skimmed milk, cream powder, sweetened milk powder, modified milk powder, whey powder, and buttermilk powder); vegetable beverages, such as juices, smoothies, and *aojiru* (green juice) of tomato, carrot, pumpkin, and the like; soft drinks, such as sports drinks, flavored beverages (e.g., lemonade), and fruit-flavored drinks; carbonated drinks; jelly beverages; grain beverages, such as grain beverages containing rice, soy milk, or almonds as a main ingredient; tea beverages, such as red tea, oolong tea, green tea, black tea, *matcha* tea, jasmine tea, rose hip tea, chamomile tea, and *hojicha* (Japanese green tea), and blended tea (e.g., pearl barley, barley, brown rice, soybeans, corn, and other grains, persimmon leaves, loquat leaves, leaves of kuma bamboo grass, *Gynostemma pentaphyllum, ashitaba (Angelica keiskei),* and *dokudami (Houttuynia cordata*)*,* kelp, safflower, shiitake mushroom, and *Litchi chinensis);* coffee beverages; powdered beverages, such as cocoa and *aojiru;* alcoholic beverages, such as beers, beer-taste beverages (e.g., low-malt beers), fruit wines, sake, and other brewed liquors, *shochu* (Japanese distilled liquor), whiskey, brandy, spirits, and other distilled liquors, liqueurs, which are made by mixing a distilled liquor and sugar etc. as a secondary ingredient, and other mixed alcoholic beverages, cocktails, fizzes, and *chuhai,* which are made by further adding fruit juices, flavors, carbon dioxide, etc. to those alcoholic beverages; and the like. Of these, for example, fruit juice-containing beverages are preferable.

Confectionery refers to foods produced or prepared as luxury foods for taste sensation, such as olfactory sensation, with various smells by emphasizing the taste, such as sweetness or saltiness, or by improving a tactile sensation, such as mouthfeel. Specific examples include jellies, puddings, chocolate, frozen desserts (e.g., ice cream and sherbet), and the like. Of these, for example, jellies and frozen desserts (e.g., ice cream and sherbet) are preferable; and in particular, for example, jellies are particularly preferable.

Examples of cooked rice include white rice, salted rice, red bean rice, *okowa* (sticky glutinous rice), seasoned rice, mixed rice, rice balls, sushi rice, rice cakes, dumplings, and the like. Examples of "rice" include *uruchimai* (ordinary Japanese rice), glutinous rice, no-wash rice having different degrees of polishing, brown rice, and the like. Other examples include foods prepared using cooked rice and other ingredients, such as sushi, chirashi-sushi, curry and rice, rice bowl dishes, fried rice, *tenshinhan* (crab meat omelet on rice), and the like.

Noodles are foods that are made from dough made mainly from wheat flour, rice flour, buckwheat flour, beans, or other grain flours, and formed or processed into the shape of noodles, plates, ribbons, or the like; and that are cooked by boiling, simmering, or steaming. Noodles are not particularly limited in this regard. Examples include *soba* (buckwheat noodles), *udon* (wheat noodles), *kishimen* (noodles made in flat strips), ramen, Chinese noodles, pasta, macaroni, *somen* (thin noodles), pho, Korean cold noodles, glass noodles, and the like.

Prepared foods are foods obtained by cooking ingredients such as meat, seafood, eggs, milk, vegetables, fruits, herbs, and seaweed in an appropriate manner. Examples of prepared foods include pickles, simmered foods, grilled foods, fried foods, stir-fried foods, steamed foods, *aemono* (dressed dishes), and the like. Specific examples include sweet-and-sour pork, vinegared dishes, vinegar pickles, and the like.

Soups are water-rich foods obtained by cooking ingredients such as meat, seafood, eggs, milk, vegetables, fruits, herbs, and seaweed in an appropriate manner. Specific examples of soups include minestrone, *suan la tang, paitan* soup (white broth), *jjigae* soup (Korean stew), and the like.

Bread is a food with a moisture content of 10% or more made by kneading and fermenting a mixture obtained by adding yeast to the main ingredient (wheat flour, or a mixture of wheat flour and grain flour), or a mixture obtained by adding ingredients, such as water, salt, fruits (e.g., grapes), vegetables, eggs and processed products thereof, sugar, edible oils and fats, milk, and dairy products, to the mixture of the main ingredient and yeast, to prepare a dough (hereinafter referred to as "bread dough"); and baking the bread dough. Specific examples of bread include loaves of bread made by baking bread dough in a loaf pan (a rectangular parallelepiped or cylindrical pan); sweet buns made by wrapping or inserting bean paste, cream, jam, edible oils and fats, or the like in bread dough, or placing bean paste, cream, jam, edible oils and fats, or the like on the top of bread dough and baking the resulting bread dough; and the like.

Pizza is a food made by kneading wheat flour, water, salt, yeast, sugar, and a small amount of olive oil, fermenting the mixture to prepare a dough, stretching the dough thinly into a round shape, topping the dough with ingredients, and baking the dough topped with ingredients in an oven or special oven.

Cereals are simple foods made by processing grains, such as corn, oats, wheat, barley, and rice, by cooking with heat (e.g., crushing grains into thin pieces (flakes), processing grains into a puffy form (puffing grains), or mixing grains and forming the mixture into a sheet shape, followed by crushing) to make them easier to eat and to make them in a form suitable for long-term storage.

Packed lunches are not particularly limited as long as they are one or more of the above-mentioned foods and drinks arranged in a container.

The composition for preparing a food or drink to be eaten or drunk is not particularly limited, and examples thereof include compositions for preparing a drink, dessert sauce or cream, seasonings, retort foods, and the like. Of these, for example, compositions for preparing a drink, dessert sauce or cream, seasonings, and the like are preferable, and compositions for preparing a drink are more preferable.

Examples of compositions for preparing a drink include a concentrated type of drink. This type is diluted with a suitable drink (e.g., water or a drink mentioned above) and then served for drinking. The recommended dilution factor is, for example, 1.1- to 50-fold, preferably 2- to 20-fold, more preferably 3- to 12-fold, and even more preferably 4- to 8-fold.

Dessert sauce or cream is a liquid or semisolid sauce or cream that is poured on, placed on, or mixed with drinks or confectionery (e.g., jellies, cakes, and ice cream) to add flavor, texture, or color to desserts. Specific examples include caramel sauce, custard sauce, chocolate sauce, fruit sauces such as raspberry sauce, strawberry sauce, blueberry sauce, apple sauce, and pomegranate sauce, and the like.

Examples of seasonings include, but are not limited to, sauces (e.g., *yakiniku* (grilled meat cuisine) sauces and sesame sauces and other sesame-containing seasonings), dressings (e.g., non-oil dressing, separated dressing, and emulsified dressing), seasoning vinegar (e.g., general-purpose seasoning vinegar, seasoning vinegar for vinegared dishes, seasoning vinegar for sushi rice, seasoning liquids for pickling (e.g., for pickles), and sweet vinegar), cooked rice seasonings, *ponzu* seasonings, *dashi*-containing seasonings (e.g., *mentsuyu* (soup bases) and hot-pot soup bases), *natto* seasonings, pickling seasonings, meat seasonings, vinegar, Worcestershire sauces, ketchup, oyster sauces, salsa, sambal sauces, chili sauces, spicy-spice-containing seasonings, chutney, mustard, mayonnaise, and the like.

Retort foods are not particularly limited as long as they are obtained by packaging cooked or semi-cooked foods inside a retort pouch or a can. Examples of foods to be packaged include the above-mentioned foods themselves, foods with which the above-mentioned foods can be obtained by simple cooking (for example, by adding ingredients and cooking with heat), and the like.

The acetic acid-containing food or drink of the present invention can contain other materials according to the type of food or drink. Examples of the other materials include water, saccharides (including high-intensity sweeteners), crushed fruits and vegetables obtained by cutting, grating, or other processes (e.g., squeezed juice such as fruit juice and vegetable juice, puree, and paste), flavors, vinegar, salt, amino acid-based seasonings, nucleic acid-based seasonings, organic acid-based seasonings (or acidulants), acidulants, flavor materials, umami seasonings, alcoholic beverages, fats and oils, spicy seasonings, spicy seasoning extracts, flavoring oils, viscosity adjusters, stabilizers, coloring agents, calcium salts, ingredients, and the like. The combinations and contents of these other materials are not particularly limited and can be appropriately set according to the type of food or drink.

The other materials described above can be suitably used, particularly in drinks, compositions for preparing a drink, and seasonings. Examples of other materials that can be suitably used, particularly in drinks and compositions for preparing a drink include water, saccharides (including high-intensity sweeteners), crushed fruits and vegetables obtained by cutting, grating, or other processes (e.g., squeezed juice such as fruit juice and vegetable juice, puree, and paste), flavors, vinegar, salt, stabilizers, coloring agents, calcium salts, amino acid-based seasonings, nucleic acid-based seasonings, organic acid-based seasonings (or acidulants), flavor materials, umami seasonings, alcoholic beverages, and the like.

According to the present invention, the deterioration odor derived from fruit juice can be suppressed. To attain the effect, the acetic acid-containing food or drink of the present invention preferably contains fruit juice. For example, fruit juices derived from the fruits mentioned below can be used. Preferred examples of usable fruit juices include apple juice, blueberry juice, citrus (e.g., orange, lemon, *Citrus junos, Citrus sphaerocarpa, Citrus sudachi,* lime, mandarin, orange, grapefruit, pink grapefruit, *Citrus hassaku,* and calamondin) juice, strawberry juice, pomegranate juice, grape juice, peach juice, Japanese plum juice, and mango juice. More preferred examples include apple juice, lemon juice, *Citrus junos* juice, orange juice, mandarin juice, blueberry juice, pomegranate juice, grape juice, peach juice, and Japanese plum juice. Particularly preferred examples include apple juice and pomegranate juice.

The fruit juice content (on a not-from-concentrate fruit juice basis) in the acetic acid-containing food or drink of the present invention is not particularly limited, and is, for example, 0.2 mass% or more and 700 mass% or less, 1 mass% or more and 500 mass% or less, or 2 mass% or more and 300 mass% or less, in terms of easily preparing the acetic acid-containing food or drink of the present invention and obtaining the advantages of adding fruit juice (such as addition of fresh smell). The upper or lower limit of the above content may be lower or higher than the above ranges; and these values may be, for example, 0.5 mass%, 1 mass%, 2 mass%, 3 mass%, 5 mass%, 10 mass%, 30 mass%, 50 mass%, 100 mass%, 200 mass%, 300 mass%, 400 mass%, 500 mass%, or 600 mass%. The fruit juice content (on a not-from-concentrate fruit juice basis) refers to the mass% concentration based on not-from-concentrate fruit juice, which is obtained by squeezing a fruit, taken as 100%, and can be calculated by multiplying the fruit juice content (mass%) in a drink by the concentration ratio of the fruit juice. For example, when apple juice with a concentration ratio of 5-fold is added in an amount of 10 mass% to a drink, the fruit juice content (on a not-from-concentrate fruit juice basis) is 50 mass%.

When the acetic acid-containing food or drink of the present invention is a drink or a composition for preparing a drink, the pH thereof is not particularly limited as long as it is an acidic value (less than 7). The pH is generally determined from the viewpoint of the balance between flavor and taste. Although it is not particularly limited, the pH is generally 2.0 or more, preferably 2.2 or more, and more preferably 2.3 or more, and the pH is also generally 4.6 or less, preferably 4.5 or less, and more preferably 4.4 or less.

Examples of saccharides include sugar, maltose, fructose, isomerized liquid sugar, glucose, brown cane sugar, honey, *mizuame* (syrup), dextrin, lactose, galactose, and sugar alcohols such as sorbitol, maltitol, and xylitol. These saccharides may be used singly or in any combination of two or more at any ratio.

Examples of high-intensity sweeteners include aspartame, acesulfame potassium, sucralose, neotame, licorice extract, stevia, and enzyme-treated products thereof. These high-intensity sweeteners may be used singly or in any combination of two or more at any ratio.

Examples of fruits include those derived from apple, peach, grape, acerola, blueberry, pear, apricot, orange, lemon, *Citrus junos, Citrus sphaerocarpa, Citrus sudachi,* lime, mandarin, grapefruit, strawberry, pineapple, banana, melon, kiwifruit, cassis, apricot, guava, plum, mango, papaya, lychee, Japanese plum, pomegranate, acai, pink grapefruit, raspberry, white grape, bergamot, passion fruit, *Citrus hassaku,* calamondin, and the like. Of these, apple, blueberry, lemon, *Citrus junos,* orange, mandarin, strawberry, pomegranate, grape, peach, Japanese plum, mango can be preferably used, apple, blueberry, pomegranate, grape, peach, Japanese plum can be more preferably used, and apple and pomegranate can be particularly preferably used. The fruits are not particularly limited to these, and may be used singly or in any combination of two or more at any ratio.

Examples of vegetables include, but are not limited to, those derived from fruit vegetables (e.g., tomato, pepper, bell pepper, cucumber, eggplant, red bell pepper, pumpkin, soybean, and green soybean), root vegetables (e.g., ginger, garlic, radish, corn, carrot, and beet), leaf vegetables (e.g., onion, cabbage, lettuce, spinach, Chinese cabbage, celery, *komatsuna* (Japanese mustard spinach), bok choy, mulukhiyah, kale, perilla, Chinese chive, parsley, and Welsh onion), stem vegetables (e.g., garlic, asparagus, and bamboo shoot), flower vegetables (e.g., broccoli and cauliflower), mushrooms, and the like. These vegetables may be used singly or in any combination of two or more at any ratio. Of these, tomato, bell pepper, red bell pepper, pumpkin, soybean, green soybean, ginger, corn, carrot, beet, spinach, kale, perilla, and broccoli can be preferably used; tomato, bell pepper, pumpkin, corn, beet, and carrot can be more preferably used; and tomato and carrot can be particularly preferably used. Squeezed juices (fruit juices and vegetable juices), purees, pastes, and the like obtained from these vegetables and fruits may be used singly or in any combination of two or more at any ratio in the drink of the present invention.

Examples of flavors include grape flavors, apple flavors, lemon flavors, orange flavors, grapefruit flavors, *Citrus junos* flavors, *Citrus sudachi* flavors, blueberry flavors, Japanese plum flavors, cassis flavors, pomegranate flavors, peach flavors, raspberry flavors, milk flavors such as yogurt flavors, rose hip flavors, chamomile flavors, jasmine flavors, ginger flavors, garlic flavors, mustard flavors, onion flavors, sesame flavors, Welsh onion flavors, Chinese chive flavors, perilla flavors, wasabi flavors, and the like. These flavors may be used singly or in any combination of two or more at any ratio.

Examples of vinegars include brewed vinegars, which are produced from grains such as rice or wheat or from fruit juice, and synthetic vinegars, which are produced by adding sugar or other seasonings to a diluted solution of glacial acetic acid or acetic acid or adding brewed vinegar thereto, any of which may be used. Examples of brewed vinegars include rice vinegar, grain vinegar (e.g., brown rice vinegar, black vinegar, sake lees vinegar, malt vinegar, adlay vinegar, and soybean vinegar), fruit vinegar (e.g., cider vinegar, grape vinegar, white grape vinegar, citrus (such as lemon, *Citrus junos, Citrus sphaerocarpa,* orange, mandarin, *Citrus depressa,* grapefruit, and calamondin) vinegar, mango vinegar, strawberry vinegar, blueberry vinegar, pomegranate vinegar, peach vinegar, plum vinegar, pineapple vinegar, wine vinegar, and balsamic vinegar), alcoholic vinegar produced by acetic acid fermentation using ethanol as a raw material, Chinese vinegar, sherry vinegar, and the like. Examples of synthetic vinegars include glacial acetic acid or acetic acid diluted with water as appropriate. These vinegars may be used singly or in a combination of two or more.

Salts may be used as is or may be a food containing salt. Examples of foods containing salt include, but are not limited to, soy sauce, *miso* (fermented soybean paste), soup stock, and the like.

Examples of soy sauces include, but are not limited to, *koikuchi* (dark-colored) soy sauce, *usukuchi* (light-colored) soy sauce, white soy sauce, *tamari* (thick) soy sauce, *saishikomi* (refermented) soy sauce, and the like. These soy sauces may be used singly or in any combination of two or more at any ratio.

Examples of *misos* include, but are not limited to, barley *miso,* rice *miso,* bean *miso,* mixed *miso,* as well as dark-brown *miso,* white *miso,* light-colored *miso,* etc., named according to the difference in color caused by the production method therefor. These *misos* may be used singly or in any combination of two or more at any ratio.

Examples of amino acid-based seasonings include sodium L-glutamate, DL-alanine, glycine, L- or DL-tryptophan, L-phenylalanine, L- or DL-methionine, L-lysine, L-aspartic acid, sodium L-aspartate, L-arginine, and the like. These amino acid-based seasonings may be used singly or in any combination of two or more at any ratio.

Examples of nucleic acid-based seasonings include disodium 5'-inosinate, disodium 5'-guanylate, disodium 5'-uridylate, disodium 5'-cytidylate, calcium 5'-ribonucleotide, disodium 5'-ribonucleotide, and the like. These nucleic acid-based seasonings may be used singly or in any combination of two or more at any ratio.

Examples of organic acid-based seasonings include calcium citrate, trisodium citrate, potassium gluconate, sodium gluconate, succinic acid, monosodium succinate, disodium succinate, sodium acetate, potassium DL-bitartrate, potassium L-bitartrate, sodium DL-tartrate, sodium L-tartrate, potassium lactate, calcium lactate, sodium lactate, monosodium fumarate, sodium DL-malate, and the like. These organic acid-based seasonings may be used singly or in any combination of two or more at any ratio. Use of two or more organic acid-based seasonings is preferable, because the tastes of the seasonings are enhanced synergistically.

Examples of acidulants include lactic acid, malic acid, citric acid, gluconic acid, succinic acid, tartaric acid, phytic acid, fumaric acid, phosphoric acid, and the like. These acidulants may be used singly or in any combination of two or more at any ratio.

Examples of flavor materials include soup stock made from bonito, soup stock made from kelp, vegetable extract, bonito extract, kelp extract, seafood extract, meat extract, and the like. These flavor materials may be used singly or in any combination of two or more at any ratio.

Examples of umami seasonings include protein hydrolysates, yeast extracts, and the like. These umami seasonings may be used singly or in any combination of two or more at any ratio.

Examples of alcoholic beverages include sake, synthetic sake, *mirin* (sweet cooking rice wine), *shochu* (Japanese distilled liquor), wine, liqueur, Shaoxing rice wine, and the like. These alcoholic beverages may be used singly or in any combination of two or more at any ratio.

Examples of fats and oils include soybean oil, soybean germ oil, rapeseed oil, corn oil, sesame oil, perilla oil, linseed oil, peanut oil, safflower oil, high oleic safflower oil, sunflower oil, cottonseed oil, grape seed oil, macadamia nut oil, hazelnut oil, pumpkin seed oil, walnut oil, camellia oil, *Camellia sinensis* seed oil, perilla oil, olive oil, rice-bran oil, wheat germ oil, palm oil, alga oil, and the like. These fats and oils may be used singly or in any combination of two or more at any ratio.

Spicy seasonings refer to plant parts (e.g., fruits, pericarps, flowers, buds, barks, stems, leaves, seeds, roots, rhizomes, or the like of plants) that have specific aromas, pungent tastes, and/or color tones, and are added to foods or drinks for the purpose of flavoring, deodorizing, seasoning, coloring, or the like. Spicy seasonings include spices and herbs. Spices refer to spicy seasonings derived from plant parts other than stems, leaves, and flowers. Examples of spices include pepper (black pepper, white pepper, and red pepper), garlic, ginger, sesame (sesame seed), chili pepper, horseradish, mustard, poppy seed, *Citrus junos,* nutmeg, cinnamon, paprika, cardamom, cumin, saffron, allspice, clove, *sansho* (Japanese pepper), orange peel, fennel, licorice, fenugreek, dill seed, Sichuan pepper, long pepper, olive fruit, and the like. Herbs refer to spicy seasonings derived from stems, leaves, or flowers. Examples of herbs include watercress, coriander, perilla, celery, tarragon, chive, chervil, sage, thyme, laurel, Chinese chive, parsley, mustard green (leaf mustard), *myoga* (Japanese ginger), mugwort, basil, oregano, rosemary, peppermint, savory, lemongrass, dill, wasabi leaf, *sansho* (Japanese pepper) leaf, and the like.

Spicy seasoning extracts may be any extracts of foods generally labeled as "spicy seasonings" or "spices." Examples of spicy seasoning extracts include chili pepper extract, mustard extract, ginger extract, wasabi extract, pepper extract, garlic extract, onion extract, *sansho* (Japanese pepper) extract, and the like. These spicy seasoning extracts may be used singly or in any combination of two or more at any ratio.

Examples of flavoring oils include ginger oil, garlic oil, mustard oil, onion oil, sesame oil, Welsh onion oil, Chinese chive oil, *seri* (Japanese parsley) oil, perilla oil, wasabi oil, lemon oil, *Citrus junos* oil, seafood oil, meat oil, and the like. These flavoring oils may be used singly or in any combination of two or more at any ratio.

Examples of viscosity adjusters include xanthan gum, guar gum, gellan gum, gum arabic, tamarind seed gum, tara gum, gum tragacanth, pectin, cellulose, carrageenan, agar, starch, alginic acid, sodium alginate, karaya gum, pullulan, chitin, chitosan, and the like. These viscosity adjusters may be used singly or in any combination of two or more at any ratio.

Examples of ingredients include vegetables (e.g., carrot, burdock, and radish), grains (e.g., *adzuki* bean and soybean), meat, fishes, and the like. These ingredients may be used singly or in any combination of two or more at any ratio.

The acetic acid-containing food or drink of the present invention can be produced by a method comprising incorporating acetic acid at a content of 0.02 w/v% or more and incorporating at least one aromatic component selected from the group consisting of isobutanal (component A), butanal (component B), 2-methylbutanal (component C), pentanal (component D), isobutyl acetate (component E), and butyl acetate (component F) at a total content of 0.1 ppb or more. Thus, in one embodiment, the present invention relates to a method for producing an acetic acid-containing food or drink in which at least one odor selected from the group consisting of acetic acid odor, pungent odor, and stuffy odor is reduced (which may be referred to herein as "the production method of the present invention"), including the above method.

Furthermore, in one embodiment, the present invention relates to a method for suppressing at least one odor selected from the group consisting of acetic acid odor, pungent odor, and stuffy odor of an acetic acid-containing food or drink, the method comprising incorporating at least one aromatic component selected from the group consisting of isobutanal (component A), butanal (component B), 2-methylbutanal (component C), pentanal (component D), isobutyl acetate (component E), and butyl acetate (component F) at a total content of 0.1 ppb or more (which may be referred to herein as "the method of the present invention").

The timing of incorporating acetic acid, component A, component B, component C, component D, component E, and component F, and other components optionally added is not particularly limited. Examples of the timing include during production of a food or drink; after production of a food or drink; before eating or drinking; and the like. The origins of acetic acid, component A, component B, component B, component C, component D, component E, component F, etc. are not particularly limited as long as they are suitable for foods or drinks. These components are derived from, for example, flavors or other formulations, food additives, seasonings, food ingredients, or the like. After acetic acid, component A, component B, component B, component C, component D, component E, and component F, and other components optionally added are incorporated, the resulting mixture is preferably mixed as needed to disperse the components as uniformly as possible in the food or drink.

Furthermore, the present invention can provide an agent for suppressing at least one odor selected from the group consisting of acetic acid odor, pungent odor, and stuffy odor of an acetic acid-containing food or drink, the agent comprising at least one aromatic component selected from the group consisting of isobutanal (component A), butanal (component B), 2-methylbutanal (component C), pentanal (component D), isobutyl acetate (component E), and butyl acetate (component F) (which may be referred to herein as "the agent of the present invention"). In one embodiment, the agent of the present invention can contain the at least one aromatic component of the present invention in an amount of, for example, 1 to 100 mass%, 20 to 100 mass%, 40 to 100 mass%, 60 to 100 mass%, 80 to 100 mass%, 90 to 100 mass%, 95 to 100 mass%, 99 to 100 mass%, or 99.9 to 100 mass%, based on the agent of the present invention taken as 100 mass%.

The properties and state of the agent of the present invention are not particularly limited. The agent of the present invention may be, for example, in the form of a solid (e.g., powder), a semisolid, or a liquid. The agent of the present invention can be used, for example, as a food or drink or a food additive. Examples of the food or drink include foods and drinks mentioned above as examples. The food additive may contain other components. The food additive as referred to herein is used in a food production process by, for example, adding to, mixing with, or infiltrating with foods. The other components are not particularly limited as long as they can be added to foods. Examples include carriers and additives that can be added to foods. Examples of such carriers include excipients, binders, disintegrating agents, disintegrating aids, lubricants, wetting agents, and the like. The form of the food additive includes, but is not limited to, granules, powders, tablets, pills, capsules (including hard capsules and soft capsules), and the like. The agent of the present invention can suppress acetic acid odor, pungent odor, and stuffy odor not only immediately after preparation, but also after storage for a certain period of time by incorporating the agent into a food or drink. It is also possible to suppress deterioration odor derived from fruit juice.

### Examples

The present invention is described in detail below with reference to Examples. However, the present invention is not limited thereto.

### Test Example 1: Flavor Evaluation Test 1

First, diluted solutions of the components to be evaluated were prepared. The following components A to E were individually added to a 70% aqueous ethanol solution and stirred well to prepare solutions of components A to E at a concentration of 10,000 ppm.

Component A: isobutanal (reagent name: Propanal, 2-methyl-, produced by Tokyo Chemical Industry Co., Ltd., purity: 98% or higher, CAS No.: 78-84-2).

Component B: butanal (reagent name: Butanal, produced by Tokyo Chemical Industry Co., Ltd., purity: 98% or higher, CAS No.: 123-72-8).

Component C: 2-methylbutanal (reagent name: Butanal, 2-methyl-, produced by Tokyo Chemical Industry Co., Ltd., purity: 95% or higher, CAS No.: 96-17-3).

Component D: pentanal (reagent name: Pentanal, produced by Kanto Chemical Co., Inc., grade: deer special grade, purity: 98% or higher, CAS No.: 110-62-3).

Component E: isobutyl acetate (reagent name: Isobutyl acetate, produced by Tokyo Chemical Industry Co., Ltd., purity: 99% or higher, CAS No.: 110-19-0).

Component F: Butyl acetate (reagent name: Acetic acid, butyl ester, produced by Sigma-Aldrich Japan G.K., grade: special grade, purity: 98% or higher, CAS No.: 123-86-4).
The obtained solutions were diluted with ion-exchange water to thereby prepare dilutions of the components to be evaluated.

Subsequently, acetic acid (produced by Kanto Chemical Co., Ltd., grade: special grade, purity: 99.7% or higher) or isovaleric acid (produced by Fujifilm Wako Pure Chemical Corporation, grade: special, purity: 98% or higher) was added to ion-exchanged water and thoroughly stirred to prepare an acetic acid dilution and an isovaleric acid dilution.

Finally, of each of the dilutions of the components to be evaluated, the acetic acid dilution, the isovaleric acid dilution, and the 5-fold concentrated apple juice, some or all were incorporated and the resulting mixtures were stirred well to prepare test solutions having the formulations and concentrations shown in Tables 1 to 4 (Examples 1 to 40 and Comparative Examples 1 to 5). The 5-fold concentrated apple juice was prepared by placing commercially available apple juice (produced by Nagano Kohno Co., Ltd., Shinshu Shinano Sweet Apple Juice, a 160 g can) in a saucepan, heating the juice at 60 to 70°C with stirring well so as to prevent burning), and concentrating the juice until a 5-fold concentration of the juice, relative to the concentration of the juice before heating, as measured with a refractometer for sugar content ("hand-held refractometer H50" produced by Atago Co., Ltd.), was achieved.

On the other hand, controls (control test solutions) having the same formulations as in Examples 1 to 40 and Comparative Examples 1 to 5 except that neither the components to be evaluated nor the 5-fold concentrated apple juice was contained were prepared.

The test solutions and controls immediately after preparation, and the test solutions and controls after being placed in bottles (150 ml-capacity glass bottles) and stored in a sealed state at 60°C for 10 days (corresponding to the storage at a room temperature of 20°C for 12 months) were evaluated for acetic acid odor, pungent odor, and stuffy odor by 10 expert panelists whose ability to judge flavor had been proven in certain tests. The certain tests in flavor refer to the identification tests described below in 1) and 2). Persons who particularly performed well in the identification tests were defined as expert panelists. The panelists selected were skilled panelists who had worked as sensory inspectors for 10 years or more. The panelists compared each test solution to a corresponding control solution having the same formulation as the test solution except that the control solution contained neither the components to be evaluated nor the 5-fold concentrated apple juice, and scored each test solution based on the comparison according to the following evaluation criteria. The average score point of each solution was calculated.

Identification Test 1): a taste identification test in which aqueous solutions of five taste components (sweet taste: taste of sugar, sour taste: taste of tartaric acid, umami taste: taste of sodium glutamate, salty taste: taste of sodium chloride, and bitter taste: taste of caffeine) at a concentration close to each component's threshold are prepared, and whether the five taste samples can be accurately identified from a total of seven samples including two distilled water samples in addition to the solutions of five taste components is tested.

Identification Test 2): a concentration difference identification test in which five aqueous saline solutions and five aqueous acetic acid solutions each having slightly different concentrations are prepared, and whether their slight concentration difference can be accurately identified is tested.

### Criteria for evaluation of acetic acid odor

+3: Very strong acetic acid odor as compared to the control.
+2: Strong acetic acid odor as compared to the control.
+1: Slightly strong acetic acid odor as compared to the control.
±0: Acetic acid odor is equivalent to that of the control.
-1: Slightly less acetic acid odor than the control.
-2: Less acetic acid odor than the control.
-3: Significantly less acetic acid odor than the control.

### Criteria for evaluation of pungent odor

+3: Very strong pungent odor as compared to the control.
+2: Strong pungent odor as compared to the control.
+1: Slightly strong pungent odor as compared to the control.
±0: Pungent odor is equivalent to that of the control.
-1: Slightly less pungent odor than the control.
-2: Less pungent odor than the control.
-3: Significantly less pungent odor than the control.

### Criteria for evaluation of stuffy odor

+3: Very strong stuffy odor as compared to the control.
+2: Strong stuffy odor as compared to the control.
+1: Slightly strong stuffy odor as compared to the control.
±0: Stuffy odor is equivalent to that of the control.
-1: Slightly less stuffy odor than the control.
-2: Less stuffy odor than the control.
-3: Significantly less stuffy odor than the control.

Further, the average value was calculated from the average score points of the acetic acid odor, pungent odor, and stuffy odor immediately after the preparation and those after storage at 60°C for 10 days, and comprehensive evaluation was performed based on the obtained average value according to the following evaluation criteria.

### Comprehensive evaluation

A: -3.0 ≤ the average value ≤ -2.5.
B: -2.5 < the average value ≤ -2.0.
C: -2.0 < the average value ≤ -1.5.
D: -1.5 < the average value ≤ -0.5.
E: -0.5 < the average value ≤ +3.0.

For the test solutions containing 5-fold concentrated apple juice (Examples 36 to 40 and Comparative Examples 1 to 5), the ten expert panelists were further asked to evaluate deterioration odor derived from the fruit juice after storage at 60°C for 10 days (heavy, unpleasant odor, dusty odor or sauce-like odor that lingered in the nose, such as the smell of steamed potatoes, which is different from the smell of the samples immediately after preparation). Each test solution was scored by the panelists according to the following evaluation criteria, and the average score point of each solution was calculated.

### Criteria for evaluation of deterioration odor

+3: Very strong deterioration odor.
+2: Strong deterioration odor.
+1: Slight deterioration odor was sensed.
±0: No deterioration odor was sensed.

More specifically, the evaluation was performed in the following manner. 10 ml of a test solution or a control was placed in a sensory testing glass tinted so that the color of the contents was invisible. The glass was then covered with a Petri dish as a lid. After the glass was turned around several times in this state, the lid was opened and odor was smelled to evaluate acetic acid odor, pungent odor, stuffy odor, and deterioration odor. Once the smell disappeared from the nasal cavity, the next sample evaluation was performed.

Tables 1 to 4 show the results.

**Table 1**

| Test solution | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Acetic acid (highly acidic vinegar: 15%) | | w/v% | 0.1 | 0.1 | 0.1 | 0.1 | 0.1 | 0.1 | 0.1 | 0.1 | 0.1 | 0.1 | 0.1 | 0.1 |
| Isovaleric acid | | ppm | 5.0 | 5.0 | 5.0 | 5.0 | 5.0 | 5.0 | 5.0 | 5.0 | 5.0 | 5.0 | 5.0 | 5.0 |
| Fruit juice content (on a not-from-concentrate fruit juice basis) ^{∗} using 5-fold concentrated apple juice | | w/w% | 0.0 | 0.0 | 0.0 | 0.0 | 0.0 | 0.0 | 0.0 | 0.0 | 0.0 | 0.0 | 0.0 | 0.0 |
| A: Isobutanal | | ppb | 0.5 | 0.0 | 0.0 | 0.0 | 0.0 | 0.0 | 1.0 | 0.0 | 0.0 | 0.0 | 0.0 | 0.0 |
| B: Butanal | | ppb | 0.0 | 0.5 | 0.0 | 0.0 | 0.0 | 0.0 | 0.0 | 1.0 | 0.0 | 0.0 | 0.0 | 0.0 |
| C: 2-Methylbutanal | | ppb | 0.0 | 0.0 | 0.5 | 0.0 | 0.0 | 0.0 | 0.0 | 0.0 | 1.0 | 0.0 | 0.0 | 0.0 |
| D: Pentanal | | ppb | 0.0 | 0.0 | 0.0 | 0.5 | 0.0 | 0.0 | 0.0 | 0.0 | 0.0 | 1.0 | 0.0 | 0.0 |
| E: Isobutyl acetate | | ppb | 0.0 | 0.0 | 0.0 | 0.0 | 0.5 | 0.0 | 0.0 | 0.0 | 0.0 | 0.0 | 1.0 | 0.0 |
| F: Butyl acetate | | ppb | 0.0 | 0.0 | 0.0 | 0.0 | 0.0 | 0.5 | 0.0 | 0.0 | 0.0 | 0.0 | 0.0 | 1.0 |
| Total of components A to F | | ppb | 0.5 | 0.5 | 0.5 | 0.5 | 0.5 | 0.5 | 1.0 | 1.0 | 1.0 | 1.0 | 1.0 | 1.0 |

| Evaluation | | | | | | | | | | | | | | |
|---|---|---|---|---|---|---|---|---|---|---|---|---|---|---|
| Acetic acid odor | Immediately after preparation | Average score point | -1.5 | -2.1 | -1.4 | -2.1 | -1.1 | -0.7 | -1.8 | -2.2 | -1.3 | -2.3 | -1.0 | -1.1 |
| | 60° C for 10 days | Average score point | -1.6 | -2.3 | -1.5 | -2.2 | -1.1 | -0.7 | -2.0 | -2.4 | -1.6 | -2.5 | -1.1 | -1.1 |
| Pungent odor | Immediately after preparation | Average score point | -1.4 | -2.1 | -1.4 | -2.0 | -1.2 | -0.5 | -2.3 | -2.2 | -2.2 | -2.0 | -1.4 | -1.3 |
| | 60° C for 10 days | Average score point | -1.7 | -2.2 | -1.6 | -2.3 | -1.3 | -0.4 | -2.1 | -2.6 | -2.6 | -2.7 | -1.8 | -1.5 |
| Stuffy odor | Immediately after preparation | Average score point | -1.7 | -1.8 | -1.5 | -1.7 | -0.9 | -0.7 | -2.2 | -2.0 | -2.0 | -2.0 | -1.9 | -0.9 |
| | 60° C for 10 days | Average score point | -1.8 | -1.9 | -1.8 | -1.9 | -1.1 | -0.9 | -2.1 | -2.1 | -2.4 | -2.3 | -1.9 | -1.2 |
| Comprehensive evaluation | | | C | B | C | B | D | D | B | B | B | B | C | D |
| Average value | | | -1.6 | -2.1 | -1.5 | -2.0 | -1.1 | -0.7 | -2.1 | -2.3 | -2.0 | -2.3 | -1.5 | -1.2 |

**Table 2**

| Test solution | | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|
| Acetic acid (highly acidic vinegar: 15%) | | w/v% | 0.1 | 0.1 | 0.1 | 0.1 | 0.1 | 0.1 | 5.0 | 5.0 | 5.0 | 5.0 | 5.0 | 5.0 |
| Isovaleric acid | | ppm | 5.0 | 5.0 | 5.0 | 5.0 | 5.0 | 5.0 | 100.0 | 100.0 | 100.0 | 100.0 | 100.0 | 100.0 |
| Fruit juice content (on a not-from-concentrate fruit juice basis) ^{∗} using 5-fold concentrated apple juice | | w/w% | 0.0 | 0.0 | 0.0 | 0.0 | 0.0 | 0.0 | 0.0 | 0.0 | 0.0 | 0.0 | 0.0 | 0.0 |
| A: Isobutanal | | ppb | 5.0 | 0.0 | 0.0 | 0.0 | 0.0 | 0.0 | 1.0 | 0.0 | 0.0 | 0.0 | 0.0 | 0.0 |
| B: Butanal | | ppb | 0.0 | 5.0 | 0.0 | 0.0 | 0.0 | 0.0 | 0.0 | 0.5 | 0.0 | 0.0 | 0.0 | 0.0 |
| C: 2-Methylbutanal | | ppb | 0.0 | 0.0 | 5.0 | 0.0 | 0.0 | 0.0 | 0.0 | 0.0 | 1.0 | 0.0 | 0.0 | 0.0 |
| D: Pentanal | | ppb | 0.0 | 0.0 | 0.0 | 5.0 | 0.0 | 0.0 | 0.0 | 0.0 | 0.0 | 0.5 | 0.0 | 0.0 |
| E: Isobutyl acetate | | ppb | 0.0 | 0.0 | 0.0 | 0.0 | 5.0 | 0.0 | 0.0 | 0.0 | 0.0 | 0.0 | 5.0 | 0.0 |
| F: Butyl acetate | | ppb | 0.0 | 0.0 | 0.0 | 0.0 | 0.0 | 5.0 | 0.0 | 0.0 | 0.0 | 0.0 | 0.0 | 10.0 |
| Total of components A to F | | ppb | 5.0 | 5.0 | 5.0 | 5.0 | 5.0 | 5.0 | 1.0 | 0.5 | 1.0 | 0.5 | 5.0 | 10.0 |

| Evaluation | | | | | | | | | | | | | | |
|---|---|---|---|---|---|---|---|---|---|---|---|---|---|---|
| Acetic acid odor | Immediately after preparation | Average score point | -1.9 | -2.1 | -1.8 | -2.4 | -2.1 | -0.9 | -1.9 | -2.3 | -1.8 | -2.4 | -1.5 | -1.5 |
| | 60° C for 10 days | Average score point | -2.1 | -2.5 | -2.2 | -2.7 | -1.8 | -1.2 | -2.1 | -2.4 | -1.9 | -2.5 | -1.8 | -1.8 |
| Pungent odor | Immediately after preparation | Average score point | -2.4 | -1.9 | -1.8 | -1.9 | -2.3 | -1.5 | -2.4 | -2.0 | -2.0 | -2.1 | -1.4 | -1.4 |
| | 60° C for 10 days | Average score point | -2.1 | -2.8 | -2.4 | -2.9 | -2.1 | -2.3 | -2.1 | -2.3 | -2.3 | -2.3 | -2.6 | -2.6 |
| Stuffy odor | Immediately after preparation | Average score point | -2.3 | -2.3 | -1.9 | -1.9 | -2.4 | -1.9 | -2.2 | -1.7 | -1.9 | -2.1 | -2.5 | -2.5 |
| | 60° C for 10 days | Average score point | -2.1 | -2.5 | -2.1 | -2.6 | -2.6 | -2.3 | -2.1 | -1.8 | -2.3 | -1.9 | -2.5 | -2.6 |
| Comprehensive evaluation | | | B | B | B | B | B | C | B | B | B | B | B | B |
| Average value | | | -2.2 | -2.4 | -2.0 | -2.4 | -2.2 | -1.7 | -2.1 | -2.1 | -2.0 | -2.2 | -2.1 | -2.1 |

**Table 3**

| Test solution | | | Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|---|---|---|
| Acetic acid | | w/v% | 1.0 | 1.0 | 10.0 | 10.0 | 10.0 | 10.0 | 10.0 | 10.0 | 10.0 | 10.0 | 2.0 |
| Isovaleric acid | | ppm | 10.0 | 10.0 | 150.0 | 150.0 | 150.0 | 150.0 | 150.0 | 150.0 | 150.0 | 150.0 | 20.0 |
| Fruit juice content (on a not-from-concentrate fruit juice basis) ^{∗} using 5-fold concentrated apple juice | | w/w% | 0.0 | 0.0 | 0.0 | 0.0 | 0.0 | 0.0 | 0.0 | 0.0 | 0.0 | 0.0 | 0.0 |
| A: Isobutanal | | ppb | 0.0 | 0.0 | 0.0 | 0.0 | 0.0 | 0.0 | 0.0 | 0.0 | 0.0 | 0.2 | 0.1 |
| B: Butanal | | ppb | 0.1 | 0.0 | 2.0 | 0.0 | 1.0 | 0.2 | 0.6 | 1.4 | 1.8 | 0.6 | 0.1 |
| C: 2-Methylbutanal | | ppb | 0.0 | 0.0 | 0.0 | 0.0 | 0.0 | 0.0 | 0.0 | 0.0 | 0.0 | 0.2 | 0.1 |
| D: Pentanal | | ppb | 0.0 | 0.1 | 0.0 | 2.0 | 1.0 | 1.8 | 1.4 | 0.6 | 0.2 | 0.6 | 0.1 |
| E: Isobutyl acetate | | ppb | 0.0 | 0.0 | 0.0 | 0.0 | 0.0 | 0.0 | 0.0 | 0.0 | 0.0 | 0.2 | 0.1 |
| F: Butyl acetate | | ppb | 0.0 | 0.0 | 0.0 | 0.0 | 0.0 | 0.0 | 0.0 | 0.0 | 0.0 | 0.2 | 0.1 |
| Total of components A to F | | ppb | 0.11 | 0.1 | 2.0 | 2.0 | 2.0 | 2.0 | 2.0 | 2.0 | 2.0 | 2.0 | 0.6 |

| Evaluation | | | | | | | | | | | | | |
|---|---|---|---|---|---|---|---|---|---|---|---|---|---|
| Acetic acid odor | Immediately after preparation | Average score point | -0.5 | -0.6 | -2.1 | -2.2 | -2.5 | -2.0 | -2.5 | -2.5 | -2.0 | -2.6 | -1.6 |
| | 60° C for 10 days | Average score point | -0.9 | -0.9 | -2.3 | -2.3 | -2.8 | -2.1 | -2.8 | -2.8 | -2.6 | -2.9 | -1.9 |
| Pungent odor | Immediately after preparation | Average score point | -0.9 | -0.9 | -2.0 | -2.0 | -2.5 | -2.1 | -2.5 | -2.5 | -1.8 | -1.8 | -1.5 |
| | 60° C for 10 days | Average score point | -1.1 | -1.1 | -2.5 | -2.5 | -2.7 | -2.5 | -2.7 | -2.9 | -2.5 | -2.8 | -1.7 |
| Stuffy odor | Immediately after preparation | Average score point | -1.2 | -1.2 | -2.0 | -2.0 | -2.5 | -2.0 | -2.5 | -2.5 | -1.9 | -2.5 | -1.6 |
| | 60° C for 10 days | Average score point | -1.4 | -1.3 | -2.4 | -2.2 | -2.7 | -2.2 | -2.7 | -2.7 | -2.1 | -2.7 | -1.8 |
| Comprehensive evaluation | | | D | D | B | B | A | B | A | A | B | A | C |
| Average value | | | -1.0 | -1.0 | -2.2 | -2.2 | -2.6 | -2.2 | -2.6 | -2.7 | -2.2 | -2.6 | -1.7 |

**[Table 4]**

| Test solution | | | Comp. Ex. 1 | Example 36 | Comp. Ex. 2 | Example 37 | Comp. Ex. 3 | Example 38 | Comp. Ex. 4 | Example 39 | Comp. Ex. 5 | Example 40 |
|---|---|---|---|---|---|---|---|---|---|---|---|---|
| Acetic acid | | w/v% | 2.0 | 2.0 | 7.0 | 7.0 | 5.0 | 5.0 | 8.0 | 8.0 | 10.0 | 10.0 |
| Isovaleric acid | | ppm | 0.0 | 0.0 | 50.0 | 50.0 | 100.0 | 100.0 | 10.0 | 10.0 | 30.0 | 30.0 |
| Fruit juice content (on a not-from-concentrate fruit juice basis) ^{∗} using 5-fold concentrated apple juice | | w/w% | 3.0 | 3.0 | 30.0 | 30.0 | 100.0 | 100.0 | 200.0 | 200.0 | 300.0 | 300.0 |
| A: Isobutanal | | ppb | 0.0 | 0.0 | 0.0 | 1.0 | 0.0 | 0.0 | 0.0 | 0.0 | 0.0 | 250 |
| B: Butanal | | ppb | 0.0 | 1.0 | 0.0 | 0.5 | 0.0 | 10.0 | 0.0 | 50.0 | 0.0 | 100 |
| C: 2-Methylbutanal | | ppb | 0.0 | 0.13 | 0.0 | 1.0 | 0.0 | 0.0 | 0.0 | 0.0 | 0.0 | 300 |
| D: Pentanal | | ppb | 0.0 | 1.0 | 0.0 | 0.5 | 0.0 | 10.0 | 0.0 | 50.0 | 0.0 | 100 |
| E: Isobutyl acetate | | ppb | 0.0 | 0.0 | 0.0 | 2.0 | 0.0 | 1000 | 0.0 | 0.0 | 0.0 | 10000 |
| F: Butyl acetate | | ppb | 0.0 | 0.0 | 0.0 | 10.0 | 0.0 | 1000 | 0.0 | 0.0 | 0.0 | 30000 |
| Total of components A to F | | ppb | 0.0 | 2.1 | 0.0 | 15.0 | 0.0 | 2020.0 | 0.0 | 100.0 | 0.0 | 40750.0 |

| Evaluation | | | | | | | | | | | | |
|---|---|---|---|---|---|---|---|---|---|---|---|---|
| Acetic acid odor | Immediately after preparation | Average score point | -0.1 | -2.5 | -0.2 | -2.5 | -0.3 | -2.5 | -0.4 | -2.5 | -0.5 | -2.8 |
| | 60° C for 10 days | Average score point | 0.0 | -2.8 | 0.0 | -2.8 | 0.0 | -2.8 | -0.2 | -2.8 | -0.2 | -2.8 |
| Pungent odor | Immediately after preparation | Average score point | -0.1 | -2.5 | -0.2 | -2.5 | -0.2 | -2.5 | -0.3 | -2.5 | -0.5 | -2.8 |
| | 60° C for 10 days | Average score point | 0.0 | -2.9 | -0.1 | -2.9 | -0.1 | -2.9 | -0.2 | -2.9 | -0.3 | -2.9 |
| Stuffy odor | Immediately after preparation | Average score point | 0.0 | 0.0 | -0.3 | -2.5 | -0.3 | -2.5 | 0.5 | -2.5 | 0.7 | -2.7 |
| | 60° C for 10 days | Average score point | 0.5 | -2.3 | 1.1 | -2.3 | 1.4 | -2.7 | 1.8 | -2.3 | 2.1 | -2.8 |
| Comprehensive evaluation | | | E | B | E | A | E | A | E | A | E | A |
| Average value | | | 0.1 | -2.2 | 0.1 | -2.6 | 0.1 | -2.7 | 0.2 | -2.6 | 0.2 | -2.8 |
| Deterioration odor | 60° C for 10 days | Average score point | 1.5 | 0.2 | 2.0 | 0.4 | 2.5 | 0.5 | 2.6 | 0.4 | 2.8 | 0.3 |

Tables 1 to 4 clearly show that at least one aromatic component selected from the group consisting of components A, B, C, D, E, and F can suppress acetic acid odor, pungent odor, and stuffy odor not only immediately after preparation but also after storage. Further, it was found that this effect can be enhanced (in some cases, significantly) by adjusting the contents of these components. It was also found that this effect can be further enhanced (in some cases, significantly) by combining the above components. Table 4 also shows that the above aroma component can also suppress the deterioration odor derived from the juice after storage.

### Test Example 2: Flavor Evaluation Test 2

Drinks (Examples 41 to 53) were prepared by blending ingredients according to the formulations shown in Table 5 and appropriately adding acetic acid, isovaleric acid, and components A to F (the same components as used in Test Example 1 were used) to achieve the contents shown in Table 6. The drinks (Examples 41 to 53) were prepared by fully stirring and mixing the resulting mixture at 20°C to make a homogeneous mixture, followed by sterilization at 90°C for 120 seconds and placing the resulting mixture into bottles (150 ml-capacity glass bottles).

The contents of acetic acid, isovaleric acid, and components A to F in the drink samples of the Examples and controls were measured in the following manner.

### Acetic Acid Content

Samples were diluted with ultrapure water so that each sample had an acetic acid concentration of around 100 mg%, and the peak area of acetic acid of each sample was analyzed by high-performance liquid chromatography (HPLC) under the following conditions. Further, 100 mg% acetic acid obtained by dilution with ultrapure water was analyzed as a standard sample in the same manner. The acetic acid content of each of the drink samples of the Examples and controls was calculated by the external standard method.
- Measuring equipment: high-performance liquid chromatography (Model: LC-10ADVP, produced by Shimadzu Corporation)
- Mobile phase (1): 4 mM p-toluenesulfonic acid aqueous solution, flow rate 0.9 mL/min
- Mobile phase (2): 16 mM Bis-Tris aqueous solution containing 4 mM p-toluenesulfonic acid and 80 µM MEDTA, flow rate 0.9 mL/min
- Column: Shodex RSpak KC-811 x 2 (produced by Showa Denko K.K.)
- Column temperature: 52°C
- Detection: Electrical conductivity detector

### Isovaleric Acid Content

Samples were diluted with ultrapure water to achieve an isovaleric acid concentration of around 10 mg%. The peak area of isovaleric acid was analyzed in the same manner as the above measurement of acetic acid. 10 mg% isovaleric acid was analyzed as a standard sample in the same manner. The isovaleric acid content of each sample was calculated by the internal standard method.

### Contents of Components A to F

### [1] Method for separating and concentrating components

The components were separated and concentrated under the following conditions.

After 100 g of each sample was measured into a 1-L vial and the vial was sealed, the sample was preheated at 40°C for 30 minutes. The vapor phase in the vial was then introduced in an amount of 200 ml as a sample into a concentrator.
- Volatile component concentrator: Entech 7200 (produced by Entech Corporation)
- Concentration mode: CTD
- M1 (Empty) temperature: Trap -40°C → Desorb 10°C
- M2 (Tenax) temperature: Trap -50°C → Desorb 220°C
- M3 (CryoFocus) temperature: Trap -150° C → Desorb 80°C

### [2] Method for analyzing components

The peak areas of the components were analyzed by gas chromatography and mass spectrometry under to the following conditions.

### Gas Chromatography Conditions

- Measuring equipment: Agilent 7980B GC System (produced by Agilent Technologies)
- GC column: DB-1 (produced by Agilent Technologies), length 60 m, aperture 0.32 mm, film thickness 1.0 µm
- Carrier: He gas, gas flow rate: 2.68 mL/min
- Temperature conditions: maintained at 35°C (5 min) → increased to 220°C at a temperature increment of 3°C/min → maintained for 5 minutes

### Mass Spectrometry Conditions

- Measuring equipment: Agilent 5977B MSD (produced by Agilent Technologies)
- Ionization method: EI
- Measurement mode: SCAN

### [3] Method for quantifying components (the external standard method)

Each component (the same component as used in the formulation) of a known concentration diluted with ethanol anhydride was analyzed as a standard sample and a calibration curve was created based on the detected peak area. The analysis results of analyzed samples were fit to the calibration curve to calculate the content of each component. It was confirmed that the target components for evaluation in the control drink samples were below the detection limit.

The drinks immediately after preparation and the drinks prepared and then stored in a sealed state at 60°C for 10 days were tested for acetic acid odor, pungent odor, and stuffy odor. The drinks prepared and then stored in a sealed state at 60°C for 10 days were further evaluated for deterioration odor (unpleasant odor scarcely perceived from the drinks immediately after preparation, such as potato-like odor, dust-like odor, sauce-like odor, metallic odor, terpene odor, and pungent chemical odor) in the same manner as in Test Example 1 by 10 expert panelists whose ability to judge taste and smell had been proven in certain tests. The panelists scored each drink according to the following evaluation criteria, and the average score point of each drink was calculated.

More specifically, the evaluation was conducted in the following manner. After 10 ml of each drink was placed in a sensory testing glass tinted so that the color of the contents was invisible, the glass was covered with a Petri dish as a lid. After the glass was turned around several times in this state, the lid was opened and odor was smelled to evaluate acetic acid odor, pungent odor, stuffy smell, and deterioration odor. Once the smell disappeared from the nasal cavity, the next sample evaluation was performed.

### Criteria for evaluation of acetic acid odor

+3: Very strong acetic acid odor as compared to the control.
+2: Strong acetic acid odor as compared to the control.
+1: Slightly strong acetic acid odor as compared to the control.
±0: Acetic acid odor is equivalent to that of the control.
-1: Slightly less acetic acid odor than the control.
-2: Less acetic acid odor than the control.
-3: Significantly less acetic acid odor than the control.

### Criteria for evaluation of pungent odor

+3: Very strong pungent odor as compared to the control.
+2: Strong pungent odor as compared to the control.
+1: Slightly strong pungent odor as compared to the control.
±0: Pungent odor is equivalent to that of the control.
-1: Slightly less pungent odor than the control.
-2: Less pungent odor than the control.
-3: Significantly less pungent odor than the control.

### Criteria for evaluation of stuffy odor

+3: Very strong stuffy odor as compared to the control.
+2: Strong stuffy odor as compared to the control.
+1: Slightly strong stuffy odor as compared to the control.
±0: Stuffy odor is equivalent to that of the control.
-1: Slightly less stuffy odor than the control.
-2: Less stuffy odor than the control.
-3: Significantly less stuffy odor than the control.

### Criteria for evaluation of deterioration odor

+3: Very strong deterioration odor as compared to the control.
+2: Strong deterioration odor as compared to the control.
+1: Slightly strong deterioration odor as compared to the control.
±0: Deterioration odor is equivalent to that of the control.
-1: Slightly less deterioration odor than the control.
-2: Less deterioration odor than the control.
-3: Significantly less deterioration odor than the control.

Further, the average value was calculated from the average score points of the acetic acid odor, pungent odor, and stuffy odor immediately after the preparation and after storage at 60°C for 10 days; and comprehensive evaluation was performed, based on the obtained average value, according to the following evaluation criteria.

### Comprehensive evaluation

A: -3.0 ≤ the average value ≤ -2.5.
B: -2.5 < the average value ≤ -2.0.
C: -2.0 < the average value ≤ -1.5.
D: -1.5 < the average value ≤ -0.5.
E: -0.5 < the average value ≤ +3.0.

Table 6 shows the results.

**Table 5**

| | | | Examples | | | | | | | | | | | | |
|---|---|---|---|---|---|---|---|---|---|---|---|---|---|---|---|
| | | | 41 | 42 | 43 | 44 | 45 | 46 | 47 | 48 | 49 | 50 | 51 | 52 | 53 |
| Vinegar | Brewed vinegar (acidity: 15%) | g | | | | | | | 300 | 200 | 100 | 500 | | 50 | 15 |
| | Black vineqar (acidity: 5%) | g | 30 | 50 | 75 | | | | | 200 | 50 | 100 | 20 | | |
| | Apple cider vinegar (acidity: 5%) | g | | | | 120 | 200 | 300 | 200 | | | | | | 50 |
| Sugars and sweeteners | Sugar | g | 50 | 40 | 50 | 40 | 40 | 20 | | | | | 50 | | 100 |
| | High-fructose corn syrup | g | | | | | | | | 79.9 | | | | 50 | |
| | Honey | g | | 10 | | | | | 200 | | | | | | |
| | Sucralose | g | | | | | | 0.2 | | 0.1 | | | | | |
| Fruit juice | Apple juice | g | 10 | | | | | | | 100 | | | | 5 | 10 |
| | Lemon juice | g | | 20 | | | | | | | | | | | |
| | Orange juice | q | | | 50 | | | | | | | | | | |
| | Strawberry juice | g | | | | 100 | | | | | | | | | |
| | Blueberry juice | g | | | | | 400 | | | | | | | | |
| | Pomegranate juice | g | | | | | | 300 | | | | | | | |
| | Grape juice | g | | | | | | | 200 | | | | | | 5 |
| | Peach juice | g | | | | | | | | 400 | | | | | |
| | 5-fold concentrated apple juice | g | | | | | | | | | 800 | 200 | | | |
| | Plum juice | g | | | | | | | | | | 10 | | | |
| | Manqo juice | g | | | | | | | | | | | 50 | | |
| Vegetable juice (tomato, carrot) | | g | | | | | | | | 20 | | | | | |
| Others | Yogurt | g | | | | | | | | | | | | 10 | |
| | Cheese | g | | | | | | | | | | | | 5 | |
| | Soy milk | g | | | | | | | | | | | | 5 | |
| | Black tea | g | | | | | | | | | | | | 500 | |
| | Agar | g | | | | | | | | | | | | | 30 |
| Water | | g | + | + | + | + | + | + | + | + | + | + | + | + | + |
| Total | | g | 1000 | 1000 | 1000 | 1000 | 1000 | 1000 | 1000 | 1000 | 1000 | 1000 | 1000 | 1000 | 1000 |

**Table 6**

| | | | Examples | | | | | | | | | | | | |
|---|---|---|---|---|---|---|---|---|---|---|---|---|---|---|---|
| | | | 41 | 42 | 43 | 44 | 45 | 46 | 47 | 48 | 49 | 50 | 51 | 52 | 53 |
| Fruit juice content (on juice basis) | a not-from-concentrate fruit | w/w% | 1 | 2 | 5 | 10 | 40 | 30 | 20 | 52 | 400 | 101 | 5 | 0.5 | 1.5 |
| Acetic acid | | w/v% | 0.12 | 0.21 | 0.31 | 0.56 | 0.93 | 1.39 | 5.12 | 3.62 | 1.60 | 7.39 | 0.08 | 0.70 | 0.44 |
| Isovaleric acid | | ppm | 2.24 | 3.74 | 5.61 | 8.26 | 13.77 | 20.66 | 13.77 | 14.95 | 3.74 | 7.47 | 1.49 | Not detected | 3.44 |
| A: Isobutanal | | ppb | 20.0 | 0.0 | 0.0 | 0.0 | 0.0 | 10.0 | 0.0 | 0.0 | 0.0 | 0.0 | 0.0 | 2.0 | 5.0 |
| B: Butanal | | ppb | 30.0 | 40.0 | 80.0 | 50.0 | 30.0 | 0.0 | 0.0 | 0.0 | 0.0 | 0.0 | 0.0 | 2.0 | 5.0 |
| C: 2-Methylbutanal | | ppb | 0.0 | 0.0 | 20.0 | 0.0 | 0.0 | 0.0 | 300.0 | 0.0 | 0.0 | 0.0 | 0.0 | 2.0 | 5.0 |
| D: Pentanal | | ppb | 0.0 | 0.0 | 0.0 | 20.0 | 0.0 | 100.0 | 20.0 | 100.0 | 150.0 | 0.0 | 0.0 | 2.0 | 5.0 |
| E: Isobutyl acetate | | ppb | 0.0 | 0.0 | 0.0 | 0.0 | 1000.0 | 0.0 | 0.0 | 50000.0 | 0.0 | 15000.0 | 0.0 | 0.0 | 5.0 |
| F: Butyl acetate | | ppb | 0.0 | 0.0 | 0.0 | 0.0 | 3000.0 | 0.0 | 0.0 | 50000.0 | 0.0 | 0.0 | 35000.0 | 0.0 | 20.0 |
| Total of components A to F | | ppb | 50.0 | 40.0 | 100.0 | 70.0 | 4030.0 | 110.0 | 320.0 | 100100.0 | 150.0 | 15000.0 | 35000.0 | 8.0 | 45.0 |

| Evaluation | | | | | | | | | | | | | | | |
|---|---|---|---|---|---|---|---|---|---|---|---|---|---|---|---|
| Acetic acid odor | Immediately after preparation | Average score | -2.2 | -2.2 | -2.1 | -2.7 | -2.2 | -2.8 | -2.1 | -2.3 | -2.8 | -1.8 | -1.9 | -2.0 | -2.2 |
| | 60° C for 10 days | Average score | -2.8 | -2.6 | -2.8 | -2.5 | -2.6 | -2.9 | -2.5 | -2.3 | -2.9 | -2.2 | -2.1 | -2.2 | -2.2 |
| Pungent odor | Immediately after preparation | Average score | -2.0 | -2.2 | -2.0 | -2.7 | -2.4 | -2.7 | -1.9 | -2.0 | -2.8 | -2.0 | -2.1 | -2.3 | -1.9 |
| | 60° C for 10 days | Average score | -2.5 | -2.5 | -2.5 | -2.7 | -2.5 | -2.8 | -2.6 | -2.5 | -2.8 | -2.1 | -2.2 | -2.5 | -2.6 |
| Stuffy odor | Immediately after preparation | Average score | -2.0 | -2.0 | -2.5 | -2.7 | -2.5 | -2.7 | -2.1 | -2.4 | -2.8 | -2.4 | -2.5 | No evaluation | -2.1 |
| | 60° C for 10 days | Average score | -2.6 | -2.6 | -2.6 | -2.8 | -2.7 | -2.9 | -2.8 | -2.7 | -2.9 | -2.6 | -2.7 | -2.6 | -2.7 |
| Comprehensive evaluation | | | B | B | B | A | A | A | B | B | A | B | B | B | B |
| Average value | | | -2.4 | -2.4 | -2.4 | -2.7 | -2.5 | -2.8 | -2.3 | -2.4 | -2.8 | -2.2 | -2.3 | -2.3 | -2.3 |
| Deterioration odor | 60° C for 10 days | Average score point | -1.5 | -1.6 | -1.6 | -1.8 | -2.3 | -2.2 | -2.0 | -2.4 | -2.6 | -2.4 | -1.9 | -1.3 | -1.4 |

### Test Example 3: Flavor Evaluation Test 3

Fruit juice as an ingredient was incorporated according to the formulations shown in Table 7, and acetic acid, isovaleric acid, and components A to F were appropriately added (the same components as used in Test Example 1 were used) to achieve the contents shown in Table 7. After each mixture was stirred and mixed well at 20°C to form a homogenous mixture, the resulting mixture was sterilized at 90°C for 120 seconds and placed in a bottle (a 150 ml-capacity glass bottle) to thereby prepare a food product (seasonings and confectionery: Examples 54 to 60). On the other hand, foods as controls having the same formulations as in Examples 54 to 60 except that the components to be evaluated were not contained (control test solutions) were prepared. The contents of acetic acid, isovaleric acid, and each of components A to F in food samples of the Examples and the controls were measured in the same manner as in Test Example 2.

The foods immediately after preparation and the foods prepared and stored in a sealed state at 60°C for 10 days were evaluated for acetic acid odor, pungent odor, and stuffy odor. The foods prepared and then stored in a sealed state at 60°C for 10 days were further evaluated for deterioration odor (unpleasant odor scarcely perceived from the foods immediately after preparation, such as potato-like odor, dust-like odor, sauce-like odor, metallic odor, terpene odor, and pungent chemical odor) in the same manner as in Test Example 1 by 10 expert panelists whose ability to judge taste and smell had been proven in certain tests. Each food was scored according to the same evaluation criteria as in Test Example 2, and the average score point of each food was calculated. Further, the comprehensive evaluation was performed in the same manner as in Test Example 2. For the frozen confectionery of Example 60, before flavor evaluation, the sample of immediately after preparation and the sample after storage at 60°C for 10 days were both stored in a freezer at -20°C for a total of 6 hours with each sample being stirred well using a fork every 2 hours, then removed from the freezer, stirred well with a fork, and then subjected to evaluation.

Table 7 shows the results.

**Table 7**

| | | | Examole54 | Example55 | Example56 | Example57 | Example58 | Example59 | Example60 |
|---|---|---|---|---|---|---|---|---|---|
| | | | Sushi vinegar | Seasoning vinegar | Soup base | Sauce | Dressing | Dessert sauce | Frozen dessert |
| Vinegar | Brewed vinegar (acidity: 15%) | g | | 300 | | | | 150 | 100 |
| | Black vinegar (acidity: 5%) | g | | 50 | 10 | | 400 | 50 | |
| | Rice vinegar (acidity: 5%) | g | 750 | | | 100 | | | 50 |
| Fruit juice | Yuzu Juice | g | | 250 | | | | | |
| | Lemon juice | g | | | | | 145 | 50 | 50 |
| | White grape juice | g | | | | | | | 500 |
| | 7-fold concentrated apple juice | | | | | | | 750 | |
| Seasoning | Salt | g | 50 | | 5 | 10 | 50 | | |
| | Sugar | g | 200 | 50 | 10 | 50 | | | 125 |
| | Honey | g | | | | 50 | | | |
| | Soy sauce | g | | 200 | 100 | 100 | | | |
| | Sake (alcoholic beverage) | g | | | 15 | | | | |
| | Mirin (sweet cooking sake) | g | | | 50 | | | | |
| | Cooking oil | g | | | | | 400 | | |
| Others | Soup stock made from bonito | a | | | 600 | | | | |
| | Sesame paste | g | | | | 50 | | | |
| | Pepper | g | | | | | | 5 | |
| | Diced fruit pulp (strawberry, orange, grape, lychee) | g | | | | | | | 50 |
| Water | | a | + | + | + | + | + | + | + |
| Total | | g | 1000 | 1000 | 1000 | 1000 | 1000 | 1000 | 1000 |
| Fruit juice content (on a not-from-concentrate fruit juice basis) | | w/w% | 0 | 25 | 0 | 0 | 14.5 | 530 | 55 |
| Acetic acid | | w/v% | 3.13 | 4.39 | 0.04 | 0.42 | 1.65 | 2.30 | 1.60 |
| isovaleric acid | | ppm | 15.79 | 3.74 | 0.75 | 2.11 | 29.89 | 3.74 | 1.05 |
| A: Isobutanal | | ppb | 0.0 | 1000.0 | 1500.0 | 1500.0 | 0.0 | 300.0 | 1.0 |
| B: Butanal | | ppb | 0.5 | 100.0 | 0.5 | 70.0 | 90.0 | 100.0 | 0.5 |
| C: 2-Methylbutanal | | ppb | 100.0 | 1000.0 | 1500.0 | 1500.0 | 1.0 | 0.0 | 1.0 |
| D: Pentanal | | ppb | 0.5 | 0.0 | 0.5 | 30.0 | 10.0 | 50.0 | 0.5 |
| E: Isobutyl acetate | | ppb | 0.0 | 0.0 | 5000.0 | 0.0 | 10.0 | 0.0 | 2.0 |
| F: Butyl acetate | | ppb | 0.0 | 0.0 | 5000.0 | 0.0 | 0.0 | 0.0 | 10.0 |
| Total of components A to F | | ppb | 101.0 | 2100.0 | 13001.0 | 3100.0 | 111.0 | 450.0 | 15.1 |

| Evaluation | | | | | | | | | |
|---|---|---|---|---|---|---|---|---|---|
| Acetic acid odor | Immediately after preparation | Average score point | -2.7 | -2.5 | -2.7 | -2.8 | -2.6 | -2.7 | -2.6 |
| | 60° C for 10 days | Average score point | -2.7 | -2.8 | -2.9 | -2.9 | -2.8 | -2.9 | -2.8 |
| Pungent odor | Immediately after preparation | Average score point | -2.7 | -2.2 | -2.3 | -2.8 | -2.7 | -2.6 | -2.5 |
| | 60° C for 10 days | Average score point | -2.8 | -2.6 | -2.5 | -2.9 | -2.7 | -2.7 | -2.7 |
| Stuffy odor | Immediately after preparation | Average score point | -2.7 | -2.1 | -2.8 | -2,7 | -2.7 | -2.7 | -2.6 |
| | 60° C for 10 days | Average score point | -2.8 | -2.6 | -2.8 | -2.8 | -2.8 | -2.8 | -2.7 |
| Comprehensive evaluation | | | A | A | A | A | A | A | A |
| Average value | | | -2.7 | -2.5 | -2.7 | -2.8 | -2.7 | -2.7 | -2.7 |
| Deterioration odor | 60° C for 10 days | Average score point | -1.5 | -1.8 | -2.7 | -1.9 | -2.7 | -2.6 | -2.9 |

## Claims

1. An acetic acid-containing food or drink comprising 0.02 w/v% or more of acetic acid and at least one aromatic component selected from the group consisting of isobutanal (component A), butanal (component B), 2-methylbutanal (component C), pentanal (component D), isobutyl acetate (component E), and butyl acetate (component F), the total content of the aromatic component being 0.1 ppb or more.

2. The acetic acid-containing food or drink according to claim 1, which meets at least one requirement selected from the group consisting of
(requirement X) the total content of component A, component B, component C, component D, and component E is 0.1 ppb or more, and (requirement Y) the content of component F is 1.0 ppb or more.

3. The acetic acid-containing food or drink according to claim 1 or 2, wherein the total content of the aromatic component is 0.5 ppb or more.

4. The acetic acid-containing food or drink according to any one of claims 1 to 3, which meets at least one requirement selected from the group consisting of
(requirement i) the total content of component A, component B, component C, and component D is 0.3 ppb or more,
(requirement ii) the content of component E is 1.0 ppb or more, and
(requirement iii) the content of component F is 5.0 ppb or more.

5. The acetic acid-containing food or drink according to claim 4, wherein requirement i meets at least one requirement selected from the group consisting of
(requirement ia) the total content of component A and component C is 0.5 ppb or more, and
(requirement ib) the total content of component B and component D is 0.3 ppb or more.

6. The acetic acid-containing food or drink according to any one of claims 1 to 5, which meets at least one requirement selected from the group consisting of
(requirement ia') the total content of component A and component C is 1.0 ppb or more,
(requirement ib') the total content of component B and component D is 0.5 ppb or more,
(requirement ii') the content of component E is 2.0 ppb or more, and
(requirement iii') the content of component F is 10.0 ppb or more.

7. The acetic acid-containing food or drink according to any one of claims 1 to 6, which comprises component B and component D.

8. The acetic acid-containing food or drink according to any one of claims 1 to 7, wherein the mass ratio of component B to component D (mass of component B:mass of component D) is 2:8 to 8:2.

9. The acetic acid-containing food or drink according to any one of claims 1 to 8, further comprising fruit juice.

10. The acetic acid-containing food or drink according to claim 9, wherein the fruit juice content (on a not-from-concentrate fruit juice basis) is 0.2 mass% or more and 700 mass% or less.

11. The acetic acid-containing food or drink according to claim 9 or 10, wherein the fruit juice is apple juice, blueberry juice, citrus juice, strawberry juice, pomegranate juice, grape juice, peach juice, Japanese plum juice, or mango juice.

12. The acetic acid-containing food or drink according to any one of claims 1 to 11, which is a drink or a composition for preparing a drink.

13. A method for producing an acetic acid-containing food or drink in which at least one odor selected from the group consisting of acetic acid odor, pungent odor, and stuffy odor is reduced, the method comprising incorporating acetic acid at a content of 0.02 w/v% or more, and incorporating at least one aromatic component selected from the group consisting of isobutanal (component A), butanal (component B), 2-methylbutanal (component C), pentanal (component D), isobutyl acetate (component E), and butyl acetate (component F) at a total content of 0.1 ppb or more.

14. A method for suppressing at least one odor selected from the group consisting of acetic acid odor, pungent odor, and stuffy odor of an acetic acid-containing food or drink, the method comprising incorporating at least one aromatic component selected from the group consisting of isobutanal (component A), butanal (component B), 2-methylbutanal (component C), pentanal (component D), isobutyl acetate (component E), and butyl acetate (component F) at a total content of 0.1 ppb or more.

15. An agent for suppressing at least one odor selected from the group consisting of acetic acid odor, pungent odor, and stuffy odor of an acetic acid-containing food or drink, the agent comprising at least one aromatic component selected from the group consisting of isobutanal (component A), butanal (component B), 2-methylbutanal (component C), pentanal (component D), isobutyl acetate (component E), and butyl acetate (component F).
